# EUROPEAN PATENT APPLICATION

(11) **EP 4 694 246 A1**
(43) Date of publication of application: **11.02.2026**
(21) Application number: 23931589.8
(22) Date of filing: 07.04.2023
(51) Int. Cl.: H04W 8/24

(54) **RESOURCE SCHEDULING METHOD AND APPARATUS**

(71) Applicant: Beijing Xiaomi Mobile Software Co., Ltd., Beijing 100085 (CN)
(72) Inventor: QIAO, Xuemei, Beijing 100085 (CN)
(74) Representative: Stöckeler, Ferdinand
(86) International application number: PCT/CN2023/087142
(87) International publication number: WO 2024/207529

(57) **Abstract**

The present disclosure provides a resource scheduling method and apparatus. In response to an enhanced reduced capability (eRedCap) terminal having a first capability, the eRedCap terminal reports to a network device the number of parallel unicast physical downlink shared channels (PDSCHs) supported by the eRedCap terminal; or, in response to the eRedCap terminal not having the first capability, the eRedCap terminal does not report to the network device the number of the parallel unicast PDSCHs supported by the eRedCap terminal, wherein the first capability comprises the capability of the eRedCap terminal to process parallel unicast PDSCHs. According to the solution provided by the present disclosure, an eRedCap terminal uploads the number of parallel unicast PDSCHs supported by the eRedCap terminal, so that a base station learns the capability of the eRedCap terminal to process parallel unicast PDSCHs, thereby reasonably scheduling the unicast PDSCHs of the eRedCap terminal.

## Description

### FIELD

The present disclosure relates to the field of communication technologies, and particularly to a method for collecting data and an apparatus.

### BACKGROUND

To reduce the cost of reduced capability (RedCap) terminals, a feasible solution is to reduce the baseband bandwidth of the RedCap terminal data channel to 5 MHz. Such RedCap terminals that support reduced baseband bandwidth are called enhanced reduced capability (eRedCap) terminals. For eRedCap terminals, the number of resources under 15/30 kHz subcarrier spacing (SCS) does not exceed 25/12 resource blocks (RBs). When performing a series of operations such as channel estimation, channel equalization, signal detection, and demodulation, the eRedCap terminal performs physical downlink shared channel (PDSCH) processing based on the resource number of 25/12 RBs; when the number of received resources exceeds 25/12 RBs, the eRedCap terminal needs to process the received data in multiple times, thereby introducing additional processing delay. Based on this, how to determine the number of PDSCH channels that an eRedCap terminal can process in parallel within a certain processing delay range is an urgent problem to be solved.

### SUMMARY

Embodiments of the present disclosure provide a resource scheduling method, apparatus, and system, so that a base station can learn the number of parallel unicast PDSCHs that an eRedCap terminal can process within a certain processing delay range, thereby reasonably scheduling unicast PDSCHs for the eRedCap terminal.

In a first aspect, embodiments of the present disclosure provide a resource scheduling method, where the method is applied to an eRedCap terminal, including:
in response to the eRedCap terminal having a first capability, reporting, to a network device, a quantity of parallel unicast PDSCHs supported by the eRedCap terminal;
   or,
in response to the eRedCap terminal not having a first capability, not reporting, to a network device, a quantity of parallel unicast PDSCHs supported by the eRedCap terminal;
where the first capability includes a processing capability of the eRedCap terminal for parallel unicast PDSCHs.

In an embodiment, the reporting, to the network device, the quantity of parallel unicast PDSCHs supported by the eRedCap terminal includes:
reporting, to the network device, a quantity of first parallel unicast PDSCHs supported by the eRedCap terminal, where a quantity of resource blocks (RBs) occupied by the first parallel unicast PDSCHs is less than or equal to a first threshold.

In an embodiment, the reporting, to the network device, the quantity of the first parallel unicast PDSCHs supported by the eRedCap terminal includes:
sending a first capability reporting field in a capability signaling to the network device; where the first capability reporting field is a predefined capability reporting field in the capability signaling, and the first capability reporting field includes the quantity of the first parallel unicast PDSCHs supported by the eRedCap terminal;
   or,
defining a new capability reporting field to obtain a second capability reporting field; where the second capability reporting field includes the quantity of the first parallel unicast PDSCHs supported by the eRedCap terminal; and sending the second capability reporting field in the capability signaling to the network device;
where a value set of the first capability reporting field is the same as or different from a value set of the second capability reporting field.

In an embodiment, the reporting, to the network device, the quantity of the first parallel unicast PDSCHs supported by the eRedCap terminal includes:
in response to a processing delay of parallel unicast PDSCHs of the eRedCap terminal being less than or equal to a preset first delay threshold, reporting the quantity of the first parallel unicast PDSCHs supported by the eRedCap terminal to the network device.

In an embodiment, the reporting, to the network device, the quantity of parallel unicast PDSCHs supported by the eRedCap terminal includes:
reporting, to the network device, a quantity of second parallel unicast PDSCHs supported by the eRedCap terminal, where a quantity of RBs occupied by the second parallel unicast PDSCHs supported by the eRedCap terminal is not limited by a first threshold.

In an embodiment, the reporting, to the network device, the quantity of the second parallel unicast PDSCHs supported by the eRedCap terminal includes:
sending a first capability reporting field in a capability signaling to the network device; where the first capability reporting field is a predefined capability reporting field in the capability signaling, and the first capability reporting field includes the quantity of the second parallel unicast PDSCHs supported by the eRedCap terminal;
   or,
defining a new capability reporting field to obtain a second capability reporting field; where the second capability reporting field includes the quantity of the second parallel unicast PDSCHs supported by the eRedCap terminal; and sending the second capability reporting field in the capability signaling to the network device;
where a value set of the first capability reporting field is the same as or different from a value set of the second capability reporting field.

In an embodiment, the reporting, to the network device, the quantity of the second parallel unicast PDSCHs supported by the eRedCap terminal includes:
in response to a processing delay of parallel unicast PDSCHs of the eRedCap terminal being less than or equal to a preset first delay threshold, reporting the quantity of the second parallel unicast PDSCHs supported by the eRedCap terminal to the network device.

In an embodiment, the reporting, to the network device, the quantity of parallel unicast PDSCHs supported by the eRedCap terminal includes:
in response to a processing delay of parallel unicast PDSCHs of the eRedCap terminal being less than or equal to a preset second delay threshold, reporting a quantity of third parallel unicast PDSCHs supported by the eRedCap terminal to the network device; where the second delay threshold is greater than a preset first delay threshold, and the first delay threshold is a threshold of a processing delay of parallel unicast PDSCHs of a non-eRedCap terminal.

In an embodiment, the eRedCap terminal supports multiple quantities of the third parallel unicast PDSCHs, and the reporting the quantity of the third parallel unicast PDSCHs supported by the eRedCap terminal to the network device includes:
reporting, to the network device, target quantities being all of the multiple quantities of the third parallel unicast PDSCHs supported by the eRedCap terminal;
   or,
reporting, to the network device, a target quantity being a maximum value of the multiple quantities of the third parallel unicast PDSCHs supported by the eRedCap terminal;
where the multiple quantities of the third parallel unicast PDSCHs correspond to different second delay thresholds.

In an embodiment, the reporting the quantity of the third parallel unicast PDSCHs supported by the eRedCap terminal to the network device includes:
sending a first capability reporting field in a capability signaling to the network device; where the first capability reporting field is a predefined capability reporting field in the capability signaling, and the first capability reporting field includes the quantity of the third parallel unicast PDSCHs supported by the eRedCap terminal;
   or,
defining a new capability reporting field to obtain a second capability reporting field; where the second capability reporting field includes the quantity of the third parallel unicast PDSCHs supported by the eRedCap terminal; and sending the second capability reporting field in a capability signaling to the network device;
where a value set of the first capability reporting field is the same as or different from a value set of the second capability reporting field.

In a second aspect, embodiments of the present disclosure further provide a resource scheduling method, where the method is applied to a network device, including:
receiving a quantity of parallel unicast physical downlink shared channels (PDSCHs) supported by an enhanced reduced capability (eRedCap) terminal reported by the eRedCap terminal in response to the eRedCap terminal having a first capability; and scheduling unicast PDSCH resources for the eRedCap terminal based on the quantity of the parallel unicast PDSCHs supported by the eRedCap terminal;
   or,
scheduling unicast PDSCH resources for the eRedCap terminal based on a processing capability of the eRedCap terminal for a single unicast PDSCH;
where the first capability includes a processing capability of the eRedCap terminal for parallel unicast PDSCHs.

In an embodiment, the receiving the quantity of the parallel unicast PDSCHs supported by the eRedCap terminal reported by the eRedCap terminal in response to the eRedCap terminal having the first capability includes:
receiving a quantity of first parallel unicast PDSCHs supported by the eRedCap terminal, where a quantity of resource blocks (RBs) occupied by the first parallel unicast PDSCHs supported by the eRedCap terminal is less than or equal to a first threshold.

In an embodiment, the receiving the quantity of the first parallel unicast PDSCHs supported by the eRedCap terminal includes:
receiving a first capability reporting field in a capability signaling; where the first capability reporting field is a predefined capability reporting field in the capability signaling, and the first capability reporting field includes the quantity of the first parallel unicast PDSCHs supported by the eRedCap terminal;
   or,
receiving a second capability reporting field in a capability signaling; where the second capability reporting field includes the quantity of the first parallel unicast PDSCHs supported by the eRedCap terminal, and the second capability reporting field is a new capability reporting field defined by the eRedCap terminal;
where a value set of the first capability reporting field is the same as or different from a value set of the second capability reporting field.

In an embodiment, the quantity of the first parallel unicast PDSCHs is reported by the eRedCap terminal in response to a processing delay of parallel unicast PDSCHs of the eRedCap terminal being less than or equal to a preset first delay threshold.

In an embodiment, the receiving the quantity of the parallel unicast PDSCHs supported by the eRedCap terminal reported by the eRedCap terminal in response to the eRedCap terminal having the first capability includes:
receiving a quantity of second parallel unicast PDSCHs supported by the eRedCap terminal, where a quantity of RBs occupied by the second parallel unicast PDSCHs supported by the eRedCap terminal is not limited by a first threshold.

In an embodiment, the receiving the quantity of the second parallel unicast PDSCHs supported by the eRedCap terminal includes:
receiving a first capability reporting field in a capability signaling; where the first capability reporting field is a predefined capability reporting field in the capability signaling, and the first capability reporting field includes the quantity of the second parallel unicast PDSCHs supported by the eRedCap terminal;
   or,
receiving a second capability reporting field in a capability signaling; where the second capability reporting field includes the quantity of second parallel unicast PDSCHs supported by the eRedCap terminal, and the second capability reporting field is a new capability reporting field defined by the eRedCap terminal.

In an embodiment, the quantity of the second parallel unicast PDSCHs is reported by the eRedCap terminal in response to a processing delay of parallel unicast PDSCHs of the eRedCap terminal being less than or equal to a preset first delay threshold.

In an embodiment, the receiving the quantity of the parallel unicast PDSCHs supported by the eRedCap terminal reported by the eRedCap terminal in response to the eRedCap terminal having the first capability includes:
receiving a quantity of third parallel unicast PDSCHs supported by the eRedCap terminal; where the quantity of the third parallel unicast PDSCHs is reported by the eRedCap terminal in response to a processing delay of parallel unicast PDSCHs of the eRedCap terminal being less than or equal to a preset second delay threshold; where the preset second delay threshold is greater than a preset first delay threshold, and the first delay threshold is a threshold of a processing delay of parallel unicast PDSCHs of a non-eRedCap terminal.

In an embodiment, the eRedCap terminal supports multiple quantities of the third parallel unicast PDSCHs, and the receiving the quantity of the third parallel unicast PDSCHs supported by the eRedCap terminal includes:
receiving target quantities from the eRedCap terminal, where the target quantities are all of the multiple quantities of the third parallel unicast PDSCHs supported by the eRedCap terminal;
   or,
receiving a target quantity from the eRedCap terminal, where the target quantity is a maximum value of the multiple quantities of the third parallel unicast PDSCHs supported by the eRedCap terminal;
where the multiple quantities of the third parallel unicast PDSCHs correspond to different second delay thresholds.

In an embodiment, the receiving the quantity of the third parallel unicast PDSCHs supported by the eRedCap terminal includes:
receiving a first capability reporting field in a capability signaling; where the first capability reporting field is a predefined capability reporting field in the capability signaling, and the first capability reporting field includes the quantity of the third parallel unicast PDSCHs supported by the eRedCap terminal;
   or,
receiving a second capability reporting field in a capability signaling; where the second capability reporting field includes the quantity of the third parallel unicast PDSCHs supported by the eRedCap terminal, and the second capability reporting field is a new capability reporting field defined by the eRedCap terminal;
where a value set of the first capability reporting field is the same as or different from a value set of the second capability reporting field.

In a third aspect, embodiments of the present disclosure further provide a resource scheduling apparatus, where the apparatus is disposed in an eRedCap terminal, and the apparatus includes:
a response module, configured to, in response to the eRedCap terminal having a first capability, report, to a network device, a quantity of parallel unicast PDSCHs supported by the eRedCap terminal;
   or,
a response module, configured to, in response to the eRedCap terminal not having a first capability, not report, to a network device, a quantity of parallel unicast PDSCHs supported by the eRedCap terminal;
where the first capability includes a processing capability of the eRedCap terminal for parallel unicast PDSCHs.

In a fourth aspect, embodiments of the present disclosure further provide a resource scheduling apparatus, where the apparatus is disposed in a network device, and the apparatus includes:
a receiving module, configured to receive a quantity of parallel unicast PDSCHs supported by an eRedCap terminal reported by the eRedCap terminal in response to the eRedCap terminal having a first capability; and a scheduling module configured to schedule unicast PDSCH resources for the eRedCap terminal based on the quantity of the parallel unicast PDSCHs supported by the eRedCap terminal;
   or,
a scheduling module, configured to schedule unicast PDSCH resources for the eRedCap terminal based on a processing capability of the eRedCap terminal for a single unicast PDSCH;
where the first capability includes a processing capability of the eRedCap terminal for parallel unicast PDSCHs.

In a fifth aspect, embodiments of the present disclosure provide a resource scheduling apparatus, where the apparatus includes a processor and a memory, where the memory stores a computer program, and the processor executes the computer program stored in the memory to cause the apparatus to perform the method according to the first aspect or the second aspect.

In a sixth aspect, embodiments of the present disclosure provide a resource scheduling apparatus, including: a processor and an interface circuit;
where the interface circuit is configured to receive code instructions and transmit the code instructions to the processor, and
the processor is configured to run the code instructions to perform the method according to the first aspect or the second aspect.

In a seventh aspect, embodiments of the present disclosure provide a computer-readable storage medium, having stored therein instructions that, when executed, cause the method according to the first aspect to be implemented, or cause the method according to the second aspect to be implemented.

The resource scheduling method and apparatus provided in the embodiments of the present disclosure, by reporting the quantity of parallel unicast PDSCHs supported by the eRedCap terminal to the network device in response to the eRedCap terminal having a first capability; or, not reporting the quantity of parallel unicast PDSCHs supported by the eRedCap terminal to the network device in response to the eRedCap terminal not having the first capability; where the first capability includes the processing capability of the eRedCap terminal for parallel unicast PDSCHs. The solutions provided in the embodiments of the present disclosure enable the base station to learn the processing capability of the eRedCap terminal for parallel unicast PDSCHs by having the eRedCap terminal report the quantity of parallel unicast PDSCHs that it can process, thereby enabling the base station to reasonably schedule unicast PDSCHs for the eRedCap terminal, avoiding the eRedCap terminal needing to process the received data in multiple times and introducing additional delay, which may cause the eRedCap terminal to fail to perform HARQ-ACK feedback in time when HARQ resources arrive, or only feedback NACK, resulting in waste of resources and increased energy consumption of the terminal.

### BRIEF DESCRIPTION OF THE DRAWINGS

In order to more clearly illustrate the technical solutions in the embodiments of the present disclosure or the background art, the following will briefly describe the drawings required for the embodiments of the present disclosure or the background art.
Figure 1 is a schematic diagram of a communication system provided by an embodiment of the present disclosure;
Figure 2 is a flowchart of a resource scheduling method provided by an embodiment of the present disclosure;
Figure 3 is a flowchart of a resource scheduling method provided by an embodiment of the present disclosure;
Figure 4 is a flowchart of a resource scheduling method provided by an embodiment of the present disclosure;
Figure 5 is a flowchart of a resource scheduling method provided by an embodiment of the present disclosure;
Figure 6 is a flowchart of a resource scheduling method provided by an embodiment of the present disclosure;
Figure 7 is a flowchart of reporting the quantity of first parallel unicast PDSCHs using a first capability reporting field provided by an embodiment of the present disclosure;
Figure 8 is a flowchart of reporting the quantity of first parallel unicast PDSCHs using a second capability reporting field provided by an embodiment of the present disclosure;
Figure 9 is a flowchart of a resource scheduling method provided by an embodiment of the present disclosure;
Figure 10 is a flowchart of a resource scheduling method provided by an embodiment of the present disclosure;
Figure 11 is a flowchart of a resource scheduling method provided by an embodiment of the present disclosure;
Figure 12 is a flowchart of reporting the quantity of second parallel unicast PDSCHs using a first capability reporting field provided by an embodiment of the present disclosure;
Figure 13 is a flowchart of reporting the quantity of second parallel unicast PDSCHs using a second capability reporting field provided by an embodiment of the present disclosure;
Figure 14 is a flowchart of a resource scheduling method provided by an embodiment of the present disclosure;
Figure 15 is a flowchart of reporting the quantity of third parallel unicast PDSCHs based on different delay thresholds provided by an embodiment of the present disclosure;
Figure 16 is a flowchart of reporting the quantity of third parallel unicast PDSCHs using a first capability reporting field provided by an embodiment of the present disclosure;
Figure 17 is a flowchart of reporting the quantity of third parallel unicast PDSCHs using a second capability reporting field provided by an embodiment of the present disclosure;
Figure 18 is a flowchart of a resource scheduling method provided by an embodiment of the present disclosure;
Figure 19 is a flowchart of a resource scheduling method provided by an embodiment of the present disclosure;
Figure 20 is a flowchart of a resource scheduling method provided by an embodiment of the present disclosure;
Figure 21 is a flowchart of a resource scheduling method provided by an embodiment of the present disclosure;
Figure 22 is a flowchart of a resource scheduling method provided by an embodiment of the present disclosure;
Figure 23 is a flowchart of a resource scheduling method provided by an embodiment of the present disclosure;
Figure 24 is a schematic structural diagram of a resource scheduling apparatus provided by an embodiment of the present disclosure;
Figure 25 is a schematic structural diagram of another resource scheduling apparatus provided by an embodiment of the present disclosure;
Figure 26 is a block diagram of a terminal device provided by an embodiment of the present disclosure; and
Figure 27 is a block diagram of a network device provided by an embodiment of the present disclosure.

### DETAILED DESCRIPTION

Here, exemplary embodiments will be described in detail, examples of which are illustrated in the accompanying drawings. When the following description refers to the drawings, unless otherwise indicated, the same numbers in different drawings represent the same or similar elements. The implementations described in the following exemplary embodiments do not represent all implementations consistent with the embodiments of the present disclosure. Rather, they are merely examples of apparatuses and methods consistent with some aspects of the embodiments of the present disclosure as detailed in the appended claims.

The terms used in the embodiments of the present disclosure are for the purpose of describing particular embodiments only and are not intended to limit the embodiments of the present disclosure. The singular forms "a", "an", and "the" used in the embodiments of the present disclosure and the appended claims are also intended to include plural forms, unless the context clearly indicates otherwise. It should also be understood that the term "and/or" as used herein refers to and includes any and all possible combinations of one or more of the associated listed items.

It should be understood that although terms such as first, second, third, etc. may be used in the embodiments of the present disclosure to describe various information, these information should not be limited by these terms. These terms are only used to distinguish information of the same type from each other. For example, without departing from the scope of the embodiments of the present disclosure, first information may also be referred to as second information, and similarly, second information may also be referred to as first information. Depending on the context, the word "if" or "when" as used herein may be interpreted as "at the time of" or "when" or "in response to determining".

The following describes in detail the embodiments of the present disclosure. Examples of the embodiments are illustrated in the accompanying drawings, where the same or similar reference numerals denote the same or similar elements throughout. When the following description refers to the accompanying drawings, unless otherwise indicated, the same numerals in different drawings represent the same or similar elements. The implementations described in the following exemplary embodiments do not represent all implementations consistent with the embodiments of the present disclosure. Rather, they are merely examples of devices and methods consistent with some aspects of the embodiments of the present disclosure, as detailed in the appended claims.

The terms used in the embodiments of the present disclosure are for the purpose of describing particular embodiments only and are not intended to limit the embodiments of the present disclosure. The singular forms "a," "an," and "the" used in the embodiments of the present disclosure and the appended claims are also intended to include plural forms, unless the context clearly indicates otherwise. It should also be understood that the term "and/or" as used herein refers to and encompasses any and all possible combinations of one or more of the associated listed items.

It should be understood that although the terms "first," "second," "third," etc. may be used in the embodiments of the present disclosure to describe various types of information, such information should not be limited by these terms. These terms are only used to distinguish one type of information from another. For example, without departing from the scope of the embodiments of the present disclosure, first information may also be referred to as second information, and similarly, second information may also be referred to as first information. Depending on the context, the word "if" or "when" as used herein may be interpreted as "when," "while," or "in response to determining."

The following describes the embodiments of the present disclosure in detail, examples of which are shown in the drawings, where the same or similar reference numerals denote the same or similar elements. The embodiments described below with reference to the drawings are exemplary, intended to explain the present disclosure, and should not be construed as limiting the present disclosure.

To better understand a resource scheduling method disclosed in the embodiments of the present disclosure, a communication system applicable to the embodiments of the present disclosure is first described below.

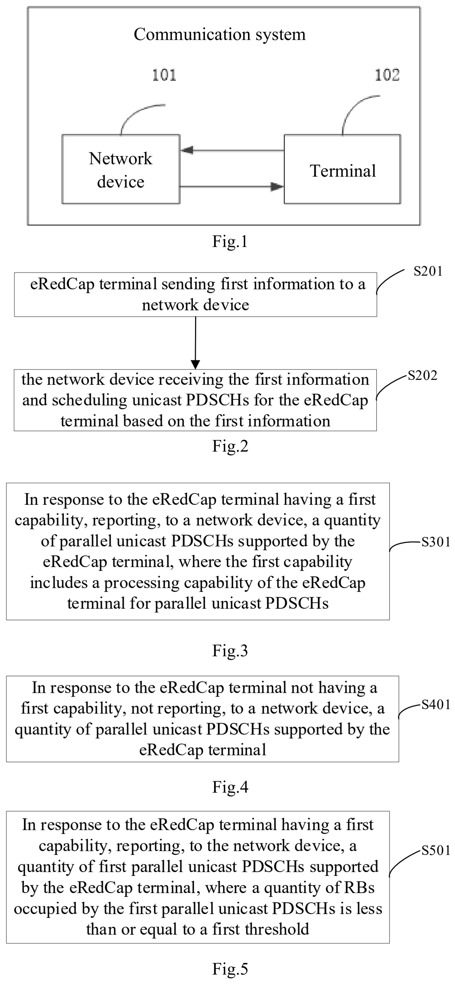

Referring to Figure 1, Figure 1 is a schematic diagram of a communication system architecture provided by an embodiment of the present application. The communication system may include, but is not limited to, one network device and one terminal device, where the terminal device communicates with the network device. The number and form of devices shown in Figure 1 are for illustration only and do not limit the embodiments of the present application. In practical applications, two or more network devices and two or more terminal devices may be included. The communication system shown in Figure 1 includes one network device 101 and one terminal device 102.

As an example, a terminal device may serve as an eRedCap terminal.

It should be noted that the technical solutions of the embodiments of the present disclosure may be applied to various communication systems. For example: Long Term Evolution (LTE) systems, fifth generation (5G) mobile communication systems, 5G new radio (NR) systems, or other future new mobile communication systems, etc.

The network device in the embodiments of the present disclosure is an entity on the network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system, etc. The embodiments of the present disclosure do not limit the specific technology and specific device form adopted by the network device. The network device provided in the embodiments of the present disclosure may be composed of a central unit (CU) and a distributed unit (DU), where the CU may also be called a control unit. The CU-DU structure can split the protocol layers of the network device, such as a base station, with the functions of some protocol layers placed in the CU for centralized control, and the functions of the remaining part or all protocol layers distributed in the DU, which is centrally controlled by the CU.

The terminal device in the embodiments of the present disclosure is an entity on the user side for receiving or transmitting signals, such as a mobile phone. The terminal device may also be called a terminal, mobile station (MS), mobile terminal (MT), etc. The terminal device may be a car with communication function, a smart car, a mobile phone, a wearable device, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, a wireless terminal device in a smart home, etc. The embodiments of the present disclosure do not limit the specific technology and specific device form adopted by the terminal device.

For an eRedCap terminal supporting a 5 MHz baseband bandwidth, since the radio frequency bandwidth of the terminal is 20 MHz, it can receive data exceeding 25/12 RBs, and cache the received data after orthogonal frequency division multiplexing (OFDM) processing. If two frequency-division multiplexing (FDM) unicast PDSCHs exceed 5 MHz, the eRedCap terminal needs to process the received data in multiple times, which will introduce additional processing delay.

Based on this, the embodiments of the present disclosure provide a resource scheduling method and apparatus, which enable the base station to learn the processing capability of the eRedCap terminal for parallel unicast PDSCHs by having the eRedCap terminal report the quantity of parallel unicast PDSCHs that it can process, thereby enabling the base station to reasonably schedule unicast PDSCHs for the eRedCap terminal, avoiding the eRedCap terminal needing to process the received data in multiple times and introducing additional delay, which may cause the eRedCap terminal to fail to perform HARQ-ACK feedback in time when HARQ resources arrive, or only feedback NACK, resulting in waste of resources and increased energy consumption of the terminal.

Referring to Figure 2, an embodiment of the present disclosure provides a resource scheduling method. As shown in Figure 2, the method may include:
Step 201: An eRedCap terminal sends first information to a network device.

In some implementations, the first information indicates the quantity of parallel unicast PDSCHs supported by the eRedCap terminal. For example, when the eRedCap terminal supports 2 parallel unicast PDSCHs, it sends the first information to the network device to inform the network device that the quantity of parallel unicast PDSCHs supported by the eRedCap terminal is 2, so that the network device can schedule unicast PDSCHs for the eRedCap terminal according to the processing capability of 2 parallel unicast PDSCHs.

In some implementations, the eRedCap terminal may determine whether it has the capability to process parallel unicast PDSCHs. When the eRedCap terminal has the capability to process parallel unicast PDSCHs, it sends the first information to the network device; and when the eRedCap terminal does not have the capability to process parallel unicast PDSCHs, it does not send the first information to the network device.

In some embodiments, the quantity of parallel unicast PDSCHs supported by the eRedCap terminal may be determined under certain constraints.

Specifically, in some embodiments, the eRedCap terminal may determine whether the quantity of RBs occupied by the parallel unicast PDSCHs supported by the eRedCap terminal is less than or equal to a preset first threshold. When the quantity of RBs occupied by the parallel unicast PDSCHs supported by the eRedCap terminal is less than or equal to the preset first threshold, the eRedCap terminal reports the quantity of unicast PDSCHs to the network device; correspondingly, when the quantity of RBs occupied by the parallel unicast PDSCHs supported by the eRedCap terminal is greater than the preset first threshold, the eRedCap terminal does not report the quantity of unicast PDSCHs to the network device. For example, for an eRedCap terminal supporting a 5 MHz baseband bandwidth, the number of parallel unicast PDSCH channels that can be processed is 2. Under 15 kHz SCS, the baseband bandwidth includes 25 RBs, i.e., the first threshold is 25 RBs. Therefore, the total number of RBs in the two unicast PDSCH channels of the eRedCap terminal cannot exceed 25 RBs. Under 30 kHz SCS, the baseband bandwidth includes 12 RBs, i.e., the first threshold is 12 RBs. Therefore, the total number of RBs in the two unicast PDSCH channels of the eRedCap terminal cannot exceed 12 RBs.

In some embodiments, the eRedCap terminal may also determine whether the processing delay of parallel unicast PDSCHs of the eRedCap terminal is less than or equal to a preset second delay threshold, where the second delay threshold is greater than a preset first delay threshold, and the first delay threshold is a threshold of a processing delay of parallel unicast PDSCHs of a non-eRedCap terminal. When the processing delay of parallel unicast PDSCHs of the eRedCap terminal is less than or equal to the preset second delay threshold, the eRedCap terminal reports the quantity of PDSCHs to the network device; correspondingly, when the processing delay of parallel unicast PDSCHs of the eRedCap terminal is greater than the preset second delay threshold, the eRedCap terminal does not report the quantity of PDSCHs to the network device. The non-eRedCap terminal may be a terminal that does not support reducing the baseband bandwidth to 5 MHz. Specifically, it may be a RedCap terminal that does not support reducing the baseband bandwidth to 5 MHz. In practical applications, the non-eRedCap terminal may also be called a non-enhanced reduced capability terminal, which is not limited in the embodiments of the present disclosure.

Correspondingly, in some embodiments, the quantity of parallel unicast PDSCHs supported by the eRedCap terminal may also be determined under the constraints of the first threshold and the second delay threshold.

In some embodiments, the eRedCap terminal may use a first capability reporting field already existing in capability signaling to report the first information to the network device; correspondingly, the network device receives the first information using the first capability reporting field in the capability signaling. The eRedCap terminal may also define a new second capability reporting field and report the first information to the network device through the second capability reporting field; correspondingly, the network device receives the first information using the second capability reporting field in the capability signaling. The new second capability reporting field may be a capability reporting field newly added to the capability signaling, i.e., the first capability reporting field is not a predefined capability reporting field in the capability signaling.

Step 202: The network device receives the first information and schedules unicast PDSCHs for the eRedCap terminal based on the first information.

In some embodiments, the network device, according to the received first information, can learn the processing capability of the eRedCap terminal for parallel unicast PDSCHs, and thus during scheduling, schedules the parallel unicast PDSCHs supported by the eRedCap terminal according to the processing capability of the eRedCap terminal for parallel unicast PDSCHs. For example, when the eRedCap terminal has the capability to process 2 parallel unicast PDSCHs, the network device can simultaneously schedule 2 unicast PDSCHs for the eRedCap terminal.

Correspondingly, in some embodiments, when the network device does not receive the first information, it considers that the eRedCap terminal does not have the capability to process parallel unicast PDSCHs. In this case, the network device may schedule one unicast PDSCH for the eRedCap terminal.

In summary, the resource scheduling method provided in the embodiments of the present disclosure enables the base station to learn the processing capability of the eRedCap terminal for parallel unicast PDSCHs by having the eRedCap terminal report the quantity of parallel unicast PDSCHs that it can process, thereby enabling the base station to reasonably schedule unicast PDSCHs for the eRedCap terminal, avoiding the eRedCap terminal needing to process the received data in multiple times and introducing additional delay, which may cause the eRedCap terminal to fail to perform HARQ-ACK feedback in time when HARQ resources arrive, or only feedback NACK, resulting in waste of resources and increased energy consumption of the terminal.

Referring to Figure 3, an embodiment of the present disclosure further provides a resource scheduling method, where the method is applied to an eRedCap terminal. As shown in Figure 3, the method may include:
Step 301: In response to the eRedCap terminal having a first capability, report, to a network device, a quantity of parallel unicast PDSCHs supported by the eRedCap terminal; where the first capability includes a processing capability of the eRedCap terminal for parallel unicast PDSCHs.

In some embodiments, the eRedCap terminal sends the quantity of parallel unicast PDSCHs supported by the eRedCap terminal to the network device; correspondingly, the network device receives the quantity of parallel unicast PDSCHs supported by the eRedCap terminal.

In some embodiments, the eRedCap terminal may support two types of parallel unicast PDSCH processing capabilities. The first parallel unicast PDSCH processing capability is not limited by the number of RBs, supporting the processing of X parallel unicast PDSCHs within a certain delay range. The second parallel unicast PDSCH processing capability is limited by the number of RBs, supporting the processing of Y parallel unicast PDSCHs within a certain delay range. The value set of X may be denoted as set#1, and the value set of Y may be denoted as set#2. set#1 and set#2 may be the same or different. The eRedCap terminal, based on its own implementation, may selectively report these two capabilities. Specifically, if both capabilities can be achieved, i.e., the eRedCap terminal supports both capabilities, both capabilities are reported; or, if the eRedCap terminal supports only one capability, only the supported capability is reported; or, if the eRedCap terminal supports neither capability, neither is reported.

In some embodiments, the maximum value of the quantity of parallel unicast PDSCHs supported by the eRedCap terminal may be less than the maximum value of the quantity of parallel unicast PDSCHs supported by a non-eRedCap terminal. Specifically, the value set of the quantity of parallel unicast PDSCHs supported by the eRedCap terminal is set#1, and the value set of the quantity of parallel unicast PDSCHs supported by the non-eRedCap terminal is set#3. Then, the maximum value in set#1 is less than the maximum value in set#3. For example, if set#3 is {2,4,7}, then set#1 may be {2,4} or {2}.

In some embodiments, the quantity of unicast PDSCHs may be determined under the constraint that the quantity of RBs occupied by the supported parallel unicast PDSCHs is within a certain resource number limit. Specifically, the quantity of unicast PDSCHs may be determined under the condition that the quantity of RBs occupied by the supported parallel unicast PDSCHs is less than or equal to a first threshold. For example, for an eRedCap terminal supporting a 5 MHz baseband bandwidth, it can process 2 parallel unicast PDSCH channels. Under 15 kHz SCS, the number of RBs of the 2 parallel unicast PDSCH channels does not exceed 25 RBs. Under 30 kHz SCS, the number of RBs of the 2 parallel unicast PDSCH channels does not exceed 12 RBs.

In this embodiment, the quantity of RBs occupied by the supported parallel unicast PDSCHs may also not be limited by the resource number. For example, for an eRedCap terminal supporting a 5 MHz baseband bandwidth, it can process 2 parallel unicast PDSCH channels, and the number of RBs of the 2 parallel unicast PDSCH channels is not limited by the 25/12 RB number.

In this embodiment, the quantity of unicast PDSCHs may also be the quantity of parallel unicast PDSCHs that the eRedCap terminal can process under a certain delay constraint. For example, when the quantity of unicast PDSCHs is N, and the processing delay required to process N parallel unicast PDSCHs is less than or equal to a preset delay threshold, the quantity of unicast PDSCHs N is reported.

In this embodiment, the eRedCap terminal may use a first capability reporting field already existing in capability signaling to report the quantity of unicast PDSCHs to the network device, or may define a new second capability reporting field to report the quantity of unicast PDSCHs to the network device through the second capability reporting field. When using the second capability reporting field to report the quantity of parallel unicast PDSCHs supported by the eRedCap terminal, the value set of the second capability reporting field may be the same as or different from the value set of the first capability reporting field.

In summary, the solutions provided in the embodiments of the present disclosure enable the base station to learn the processing capability of the eRedCap terminal for parallel unicast PDSCHs by having the eRedCap terminal report the quantity of parallel unicast PDSCHs that it can process, thereby enabling the base station to reasonably schedule unicast PDSCHs for the eRedCap terminal, avoiding the eRedCap terminal needing to process the received data in multiple times and introducing additional delay, which may cause the eRedCap terminal to fail to perform HARQ-ACK feedback in time when HARQ resources arrive, or only feedback NACK, resulting in waste of resources and increased energy consumption of the terminal.

In practical applications, when the eRedCap terminal does not have the capability to process parallel unicast PDSCHs, it may also not report the quantity of parallel unicast PDSCHs supported by the eRedCap terminal to the network device.

Based on this, an embodiment of the present disclosure further provides a resource scheduling method, where the method is applied to an eRedCap terminal. As shown in Figure 4, the method may include:
Step 401: In response to the eRedCap terminal not having a first capability, not report, to a network device, a quantity of parallel unicast PDSCHs supported by the eRedCap terminal.

It should be noted that the eRedCap terminal not having the first capability may mean that all eRedCap terminals do not have the first capability, i.e., eRedCap terminals do not support parallel unicast PDSCHs.

In some embodiments, the eRedCap terminal does not report the quantity of parallel unicast PDSCHs supported by the eRedCap terminal to the network device; correspondingly, the network device does not receive the quantity of parallel unicast PDSCHs supported by the eRedCap terminal.

In this embodiment, the eRedCap terminal does not report the capability. Thus, the base station side schedules unicast PDSCHs for the eRedCap terminal based on the processing capability for a single unicast PDSCH, i.e., the base station side determines that the eRedCap terminal does not have the capability to process parallel unicast PDSCHs, and schedules only a single unicast PDSCH for the eRedCap terminal at the same time.

In summary, the resource scheduling method provided in the embodiments of the present disclosure enables the base station to learn the processing capability of the eRedCap terminal for parallel unicast PDSCHs by having the eRedCap terminal report the quantity of parallel unicast PDSCHs that it can process, thereby enabling the base station to reasonably schedule unicast PDSCHs for the eRedCap terminal, avoiding the eRedCap terminal needing to process the received data in multiple times and introducing additional processing delay, which may cause the eRedCap terminal to fail to perform HARQ-ACK feedback in time when HARQ resources arrive, or only feedback NACK, resulting in waste of resources and increased energy consumption of the terminal.

Referring to Figure 5, an embodiment of the present disclosure further provides a resource scheduling method, applied to an eRedCap terminal. This resource scheduling method may be performed alone, or in combination with any embodiment or possible implementation in the present disclosure, or in combination with any technical solution in the related art.

As shown in Figure 5, the resource scheduling method may include:
Step 501: In response to the eRedCap terminal having a first capability, report, to the network device, a quantity of first parallel unicast PDSCHs supported by the eRedCap terminal, where a quantity of RBs occupied by the first parallel unicast PDSCHs is less than or equal to a first threshold.

In this embodiment, the first threshold may be the maximum number of RBs supported by the baseband of the eRedCap terminal for the data channel. For example, for an eRedCap terminal supporting a 5 MHz baseband bandwidth, the number of parallel unicast PDSCH channels that can be processed is 2. Under 15 kHz SCS, the baseband bandwidth includes 25 RBs, i.e., the first threshold is 25 RBs. Therefore, the total number of RBs in the two unicast PDSCH channels of the eRedCap terminal cannot exceed 25 RBs. Under 30 kHz SCS, the baseband bandwidth includes 12 RBs, i.e., the first threshold is 12 RBs. Therefore, the total number of RBs in the two unicast PDSCH channels of the eRedCap terminal cannot exceed 12 RBs.

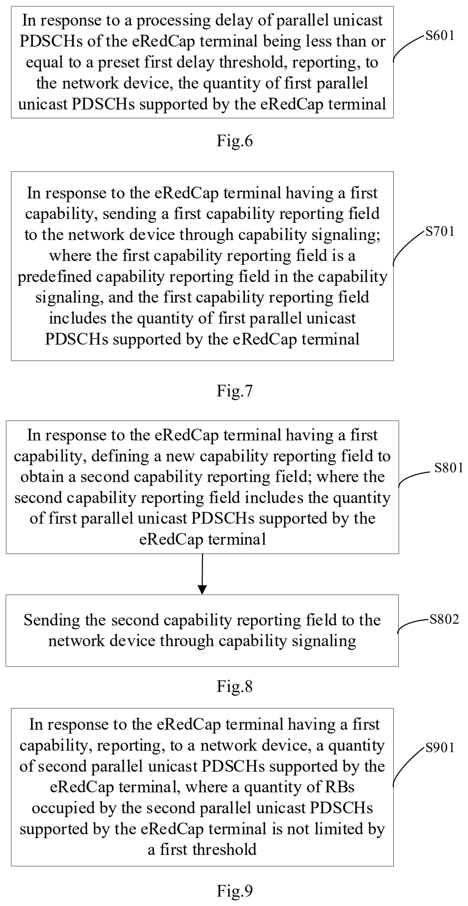

Referring to Figure 6, an embodiment of the present disclosure further provides a resource scheduling method, applied to an eRedCap terminal. This resource scheduling method may be performed alone, or in combination with any embodiment or possible implementation in the present disclosure, or in combination with any technical solution in the related art.

As shown in Figure 6, the resource scheduling method may include:
Step 601: In response to a processing delay of parallel unicast PDSCHs of the eRedCap terminal being less than or equal to a preset first delay threshold, report, to the network device, the quantity of first parallel unicast PDSCHs supported by the eRedCap terminal.

In some embodiments, the eRedCap terminal may determine whether its processing delay for parallel unicast PDSCHs is less than or equal to a preset second delay threshold. When the processing delay of the parallel unicast PDSCHs supported by the eRedCap terminal is less than or equal to the preset second delay threshold, the eRedCap terminal reports the quantity of first parallel unicast PDSCHs that it can process to the network device; correspondingly, when the processing delay of the parallel unicast PDSCHs supported by the eRedCap terminal is greater than the preset second delay threshold, the eRedCap terminal does not report the quantity of first parallel unicast PDSCHs that it can process to the network device.

In this embodiment, the first delay threshold is the processing delay of parallel unicast PDSCHs of the eRedCap terminal. The eRedCap terminal may use parallel unicast PDSCHs for parallel processing or serial processing, as long as the processing can be completed within the time range of the first delay threshold, which is not limited in the embodiments of the present disclosure.

In this embodiment, the first delay threshold may be a threshold agreed by protocol, or a threshold configured by the network device according to scheduling requirements.

In this embodiment, by introducing the first delay threshold and having the eRedCap terminal report the quantity of parallel unicast PDSCHs that it can process, the base station can learn the processing capability of the eRedCap terminal for parallel unicast PDSCHs, thereby enabling the base station to reasonably schedule unicast PDSCHs for the eRedCap terminal, avoiding the eRedCap terminal needing to process the received data in multiple times and introducing additional delay, which may cause the eRedCap terminal to fail to perform HARQ-ACK feedback in time when HARQ resources arrive, or only feedback NACK, resulting in waste of resources and increased energy consumption of the terminal.

In this embodiment, the eRedCap terminal may use a first capability reporting field already existing in capability signaling to report the quantity of first parallel unicast PDSCHs.

Based on this, referring to Figure 7, an embodiment of the present disclosure provides a method for reporting the quantity of first parallel unicast PDSCHs using a first capability reporting field. The method includes:
Step 701: In response to the eRedCap terminal having a first capability, send a first capability reporting field to the network device through capability signaling; where the first capability reporting field is a predefined capability reporting field in the capability signaling, and the first capability reporting field includes the quantity of first parallel unicast PDSCHs supported by the eRedCap terminal.

In this embodiment, using the first capability reporting field already existing in the capability signaling to report the quantity of first parallel unicast PDSCHs, the definition of the first capability reporting field may be added with the limitation on the maximum resource number for the eRedCap terminal, i.e., the definition of the first capability reporting field may be added with the condition that the quantity of RBs occupied by the first parallel unicast PDSCHs is less than or equal to the first threshold.

In this embodiment, the eRedCap terminal may also report the quantity of first parallel unicast PDSCHs based on a new second capability reporting field.

Based on this, referring to Figure 8, an embodiment of the present disclosure further provides a method for reporting the quantity of first parallel unicast PDSCHs using a second capability reporting field. The method includes:
Step 801: In response to the eRedCap terminal having a first capability, define a new capability reporting field to obtain a second capability reporting field; where the second capability reporting field includes the quantity of first parallel unicast PDSCHs supported by the eRedCap terminal;
Step 802: Send the second capability reporting field to the network device through capability signaling.

It should be noted that the value set of the first capability reporting field may be the same as or different from the value set of the second capability reporting field. Specifically, the value set of the first capability reporting field may be a first value set, for example, set {2,4,7}. The value set of the second capability reporting field may be a second value set. The first value set is a preconfigured set. The second value set may be the same as the first value set, or may include other preconfigured values, i.e., values not in the preconfigured set. For example, if the preconfigured set is {2,4,7}, the value set of the second capability reporting field may include values from the set {2,4,7}, or may include values such as 3, 5, etc.

Referring to Figure 9, an embodiment of the present disclosure further provides a resource scheduling method, applied to an eRedCap terminal. This resource scheduling method may be performed alone, or in combination with any embodiment or possible implementation in the present disclosure, or in combination with any technical solution in the related art.

As shown in Figure 9, the resource scheduling method may include:
Step 901: In response to the eRedCap terminal having a first capability, report, to a network device, a quantity of second parallel unicast PDSCHs supported by the eRedCap terminal, where a quantity of RBs occupied by the second parallel unicast PDSCHs supported by the eRedCap terminal is not limited by a first threshold.

In this embodiment, the first threshold may be the maximum number of RBs supported by the baseband of the eRedCap terminal for the data channel.

In practical applications, the quantity of RBs occupied by the second parallel unicast PDSCHs supported by the eRedCap terminal may also be limited by the first threshold.

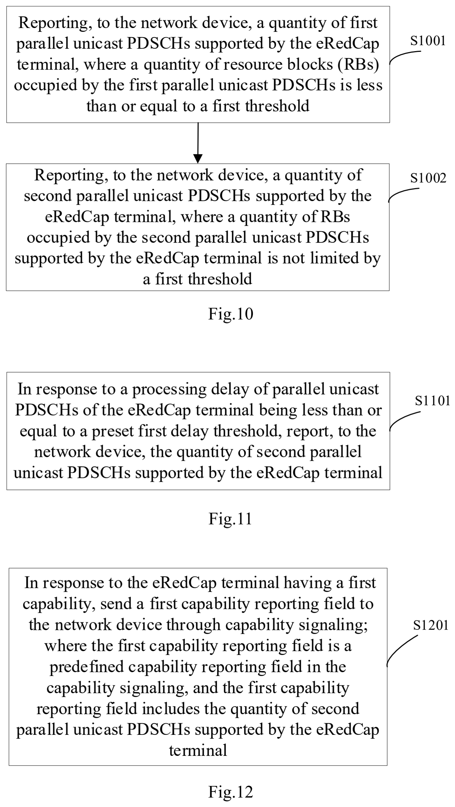

Based on this, referring to Figure 10, an embodiment of the present disclosure provides a resource scheduling method, applied to an eRedCap terminal. As shown in Figure 10, the method may include:
Step 1001: Report, to the network device, a quantity of first parallel unicast PDSCHs supported by the eRedCap terminal, where a quantity of resource blocks (RBs) occupied by the first parallel unicast PDSCHs is less than or equal to a first threshold;
Step 1002: Report, to the network device, a quantity of second parallel unicast PDSCHs supported by the eRedCap terminal, where a quantity of RBs occupied by the second parallel unicast PDSCHs supported by the eRedCap terminal is not limited by a first threshold.

In some embodiments, the eRedCap terminal may support two types of parallel unicast PDSCH processing capabilities. The first parallel unicast PDSCH processing capability is not limited by the number of RBs. The second parallel unicast PDSCH processing capability is limited by the number of RBs. The eRedCap terminal, based on its own implementation, may selectively report these two capabilities. Specifically, if both capabilities can be achieved, i.e., the eRedCap terminal supports both capabilities, both capabilities are reported, i.e., both Step 1001 and Step 1002 are performed; or, if the eRedCap terminal supports only one capability, only the supported capability is reported, i.e., either Step 1001 or Step 1002 is performed; or, if the eRedCap terminal supports neither capability, neither is reported, i.e., neither Step 1001 nor Step 1002 is performed.

In some embodiments, the first parallel unicast PDSCH processing capability supports processing X parallel unicast PDSCHs within a certain delay range. The second parallel unicast PDSCH processing capability supports processing Y parallel unicast PDSCHs within a certain delay range. The value set of X may be denoted as set#1, and the value set of Y may be denoted as set#2. set#1 and set#2 may be the same or different.

Referring to Figure 11, an embodiment of the present disclosure further provides a resource scheduling method, applied to an eRedCap terminal. This resource scheduling method may be performed alone, or in combination with any embodiment or possible implementation in the present disclosure, or in combination with any technical solution in the related art.

As shown in Figure 11, the resource scheduling method may include:
Step 1101: In response to a processing delay of parallel unicast PDSCHs of the eRedCap terminal being less than or equal to a preset first delay threshold, report, to the network device, the quantity of second parallel unicast PDSCHs supported by the eRedCap terminal.

In some embodiments, the eRedCap terminal may determine whether its processing delay for parallel unicast PDSCHs is less than or equal to a preset first delay threshold. When the processing delay of the parallel unicast PDSCHs supported by the eRedCap terminal is less than or equal to the preset first delay threshold, the eRedCap terminal reports the quantity of second parallel unicast PDSCHs that it can process to the network device; correspondingly, when the processing delay of the parallel unicast PDSCHs supported by the eRedCap terminal is greater than the preset first delay threshold, the eRedCap terminal does not report the quantity of second parallel unicast PDSCHs that it can process to the network device.

In this embodiment, by introducing the first delay threshold and having the eRedCap terminal report the quantity of parallel unicast PDSCHs that it can process, the base station can learn the processing capability of the eRedCap terminal for parallel unicast PDSCHs, thereby enabling the base station to reasonably schedule unicast PDSCHs for the eRedCap terminal, avoiding the eRedCap terminal needing to process the received data in multiple times and introducing additional delay, which may cause the eRedCap terminal to fail to perform HARQ-ACK feedback in time when HARQ resources arrive, or only feedback NACK, resulting in waste of resources and increased energy consumption of the terminal.

In this embodiment, the eRedCap terminal may use a first capability reporting field already existing in capability signaling to report the quantity of second parallel unicast PDSCHs.

Based on this, referring to Figure 12, an embodiment of the present disclosure provides a method for reporting the quantity of second parallel unicast PDSCHs using a first capability reporting field. The method includes:
Step 1201: In response to the eRedCap terminal having a first capability, send a first capability reporting field to the network device through capability signaling; where the first capability reporting field is a predefined capability reporting field in the capability signaling, and the first capability reporting field includes the quantity of second parallel unicast PDSCHs supported by the eRedCap terminal.

In this embodiment, using the first capability reporting field already existing in the capability signaling to report the quantity of second parallel unicast PDSCHs, the definition of the first capability reporting field may be added with the limitation on the maximum resource number for the eRedCap terminal, i.e., the definition of the first capability reporting field may be added with the condition that the quantity of RBs occupied by the second parallel unicast PDSCHs is less than or equal to the first threshold.

In this embodiment, the eRedCap terminal may also report the quantity of second parallel unicast PDSCHs based on a new second capability reporting field.

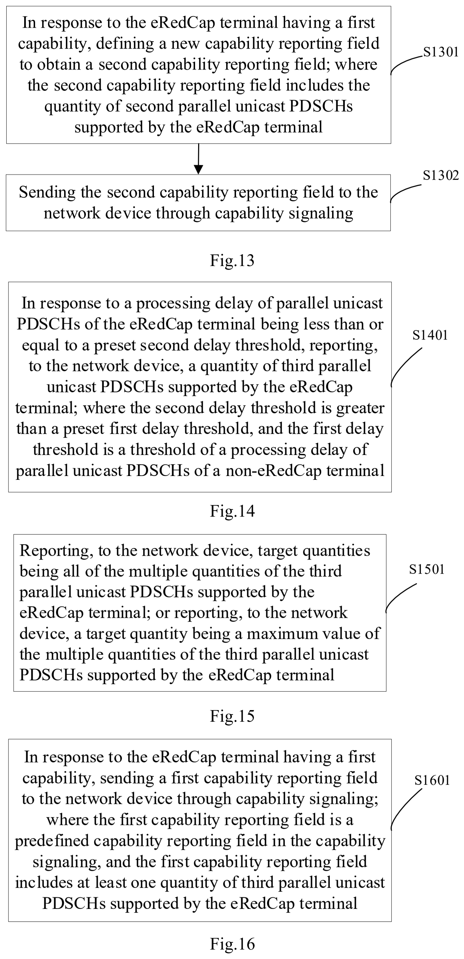

Based on this, referring to Figure 13, an embodiment of the present disclosure further provides a method for reporting the quantity of second parallel unicast PDSCHs using a second capability reporting field. The method includes:
Step 1301: In response to the eRedCap terminal having a first capability, define a new capability reporting field to obtain a second capability reporting field; where the second capability reporting field includes the quantity of second parallel unicast PDSCHs supported by the eRedCap terminal;
Step 1302: Send the second capability reporting field to the network device through capability signaling.

It should be noted that the value set of the first capability reporting field may be the same as or different from the value set of the second capability reporting field. Specifically, the value set of the first capability reporting field may be a first value set, for example, set {2,4,7}. The value set of the second capability reporting field may be a second value set. The first value set is a preconfigured set. The second value set may be the same as the first value set, or may include other preconfigured values, i.e., values not in the preconfigured set. For example, if the preconfigured set is {2,4,7}, the value set of the second capability reporting field may include values from the set {2,4,7}, or may include values such as 3, 5, etc.

Referring to Figure 14, an embodiment of the present disclosure further provides a resource scheduling method, applied to an eRedCap terminal. This resource scheduling method may be performed alone, or in combination with any embodiment or possible implementation in the present disclosure, or in combination with any technical solution in the related art.

As shown in Figure 14, the resource scheduling method may include:
Step 1401: In response to a processing delay of parallel unicast PDSCHs of the eRedCap terminal being less than or equal to a preset second delay threshold, report, to the network device, a quantity of third parallel unicast PDSCHs supported by the eRedCap terminal; where the second delay threshold is greater than a preset first delay threshold, and the first delay threshold is a threshold of a processing delay of parallel unicast PDSCHs of a non-eRedCap terminal.

In some embodiments, the eRedCap terminal may determine whether its processing delay for parallel unicast PDSCHs is less than or equal to a preset first delay threshold. When the processing delay of the parallel unicast PDSCHs supported by the eRedCap terminal is less than or equal to the preset first delay threshold, the eRedCap terminal reports the quantity of third parallel unicast PDSCHs that it can process to the network device; correspondingly, when the processing delay of the parallel unicast PDSCHs supported by the eRedCap terminal is greater than the preset first delay threshold, the eRedCap terminal does not report the quantity of third parallel unicast PDSCHs that it can process to the network device.

In this embodiment, by introducing the second delay threshold and having the eRedCap terminal report the quantity of parallel unicast PDSCHs that it can process, the base station can learn the processing capability of the eRedCap terminal for parallel unicast PDSCHs, thereby enabling the base station to reasonably schedule unicast PDSCHs for the eRedCap terminal, avoiding the eRedCap terminal needing to process the received data in multiple times and introducing additional delay, which may cause the eRedCap terminal to fail to perform HARQ-ACK feedback in time when HARQ resources arrive, or only feedback NACK, resulting in waste of resources and increased energy consumption of the terminal.

In this embodiment, the eRedCap terminal may have different parallel processing capabilities, i.e., the eRedCap terminal may support processing different quantities of parallel unicast PDSCHs. For different parallel processing capabilities, separate processing delays may be introduced, i.e., the second delay threshold may include different delay thresholds, where different quantities of third parallel unicast PDSCHs correspond to different second delay thresholds.

Based on this, referring to Figure 15, an embodiment of the present disclosure provides a method for reporting the quantity of third parallel unicast PDSCHs based on different delay thresholds. The eRedCap terminal supports multiple quantities of third parallel unicast PDSCHs, and the multiple quantities of the third parallel unicast PDSCHs correspond to different second delay thresholds. The method includes:
Step 1501: Report, to the network device, target quantities being all of the multiple quantities of the third parallel unicast PDSCHs supported by the eRedCap terminal;
   or,
Report, to the network device, a target quantity being a maximum value of the multiple quantities of the third parallel unicast PDSCHs supported by the eRedCap terminal;
where the multiple quantities of the third parallel unicast PDSCHs correspond to different second delay thresholds.

In this embodiment, first, the processing delay corresponding to each quantity of unicast PDSCHs supported by the eRedCap terminal is compared with the corresponding second delay threshold. When the processing delay for a quantity of unicast PDSCHs is less than or equal to the corresponding second delay threshold, that quantity of unicast PDSCHs is taken as the quantity of third parallel unicast PDSCHs.

In this embodiment, reporting each quantity of third parallel unicast PDSCHs as a target quantity to the network device may mean that the eRedCap terminal reports only one quantity of third parallel unicast PDSCHs at a time, or that the eRedCap terminal reports all quantities of third parallel unicast PDSCHs simultaneously.

For example, for three different supported quantities of parallel unicast PDSCHs, {2,4,7}, additional corresponding processing delay thresholds {X1, X2, X3} are introduced, where the processing delay threshold for 2 unicast PDSCHs is X1, for 4 unicast PDSCHs is X2, and for 7 unicast PDSCHs is X3. If the delay for processing 2 parallel channels by the eRedCap terminal can meet X1, then the eRedCap terminal can report the quantity 2. If the delay for processing 4 parallel channels by the eRedCap terminal can meet X2, then the eRedCap terminal can report the quantity 4. If the delay for processing 7 parallel channels by the eRedCap terminal can meet X3, then the eRedCap terminal can report the quantity 7. The eRedCap terminal may report only one unicast PDSCH quantity at a time, or may report all three unicast PDSCH quantities {2,4,7} simultaneously.

In this embodiment, for different parallel processing capabilities, a common additional processing delay may also be introduced, i.e., different quantities of third parallel unicast PDSCHs correspond to the same second delay threshold. In practical applications, a common additional processing delay may be introduced, and the sum of the additional processing delay and the first delay threshold may be taken as the second delay threshold.

In this embodiment, the quantity of third parallel unicast PDSCHs may be determined from the multiple quantities of parallel unicast PDSCHs supported by the eRedCap terminal based on the second delay threshold. Specifically, the maximum quantity of parallel unicast PDSCHs that the eRedCap terminal can support under the condition that the processing delay is less than or equal to the second delay threshold may be determined, and the determined quantity is taken as the quantity of third parallel unicast PDSCHs. The quantity of parallel unicast PDSCHs that can be processed may be determined from the value set of channel quantities of the eRedCap terminal. It should be noted that the value set of channel quantities of the eRedCap terminal may be a value set agreed by protocol, or a value set constructed by the terminal according to the channel quantities agreed by protocol.

For example, if the channel quantity set agreed by protocol is {2,4,7}, then the eRedCap terminal supports three different quantities of parallel unicast PDSCHs, {2,4,7}. An additional processing delay Y1 is introduced. From {2,4,7}, the maximum quantity of parallel unicast PDSCHs that the eRedCap terminal can support under the condition that the processing delay is less than or equal to T_processing, 1 + Y1 is determined, and this quantity is taken as the quantity of third parallel unicast PDSCHs. For example, under the condition that the processing delay is less than T_processing, 1 + Y1, if the terminal can process up to 4 parallel channels, it reports the quantity 4. As another example, if the protocol stipulates that the eRedCap terminal supports 3 parallel unicast PDSCH processing, when an additional processing delay Y1 is introduced, the maximum quantity of parallel unicast PDSCHs that the eRedCap terminal can support may also be determined from the set {2,3,4,7}.

In this embodiment, the eRedCap terminal may use a first capability reporting field already existing in capability signaling to report the quantity of first parallel unicast PDSCHs.

Based on this, referring to Figure 16, an embodiment of the present disclosure provides a method for reporting the quantity of third parallel unicast PDSCHs using a first capability reporting field. The method includes:
Step 1601: In response to the eRedCap terminal having a first capability, send a first capability reporting field to the network device through capability signaling; where the first capability reporting field is a predefined capability reporting field in the capability signaling, and the first capability reporting field includes at least one quantity of third parallel unicast PDSCHs supported by the eRedCap terminal.

In this embodiment, the eRedCap terminal may also report the at least one quantity of third parallel unicast PDSCHs based on a new second capability reporting field.

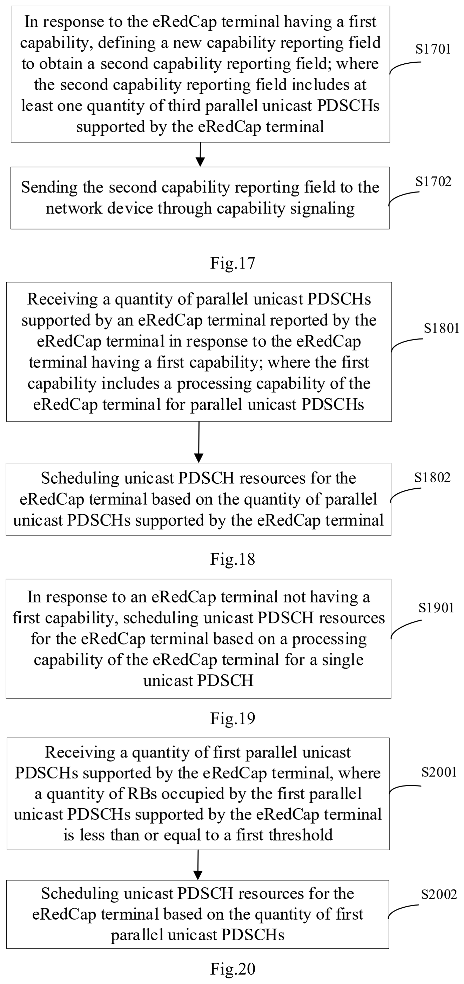

Based on this, referring to Figure 17, an embodiment of the present disclosure further provides a method for reporting the at least one quantity of third parallel unicast PDSCHs using a second capability reporting field. The method includes:
Step 1701: In response to the eRedCap terminal having a first capability, define a new capability reporting field to obtain a second capability reporting field; where the second capability reporting field includes at least one quantity of third parallel unicast PDSCHs supported by the eRedCap terminal;
Step 1702: Send the second capability reporting field to the network device through capability signaling.

It should be noted that the value set of the first capability reporting field may be the same as or different from the value set of the second capability reporting field. Specifically, the value set of the first capability reporting field may be a first value set, for example, set {2,4,7}. The value set of the second capability reporting field may be a second value set. The first value set is a preconfigured set. The second value set may be the same as the first value set, or may include other preconfigured values, i.e., values not in the preconfigured set. For example, if the preconfigured set is {2,4,7}, the value set of the second capability reporting field may include values from the set {2,4,7}, or may include values such as 3, 5, etc.

Referring to Figure 18, an embodiment of the present disclosure further provides another resource scheduling method, applied to a network device. As shown in Figure 18, the method may include:
Step 1801: Receive a quantity of parallel unicast PDSCHs supported by an eRedCap terminal reported by the eRedCap terminal in response to the eRedCap terminal having a first capability; where the first capability includes a processing capability of the eRedCap terminal for parallel unicast PDSCHs.

In some embodiments, the eRedCap terminal may support two types of parallel unicast PDSCH processing capabilities. The first parallel unicast PDSCH processing capability is not limited by the number of RBs, supporting the processing of X parallel unicast PDSCHs within a certain delay range. The second parallel unicast PDSCH processing capability is limited by the number of RBs, supporting the processing of Y parallel unicast PDSCHs within a certain delay range. The network device may receive both capabilities reported simultaneously by the eRedCap terminal, or receive one capability supported by the eRedCap terminal, or receive no capability reported by the eRedCap terminal.

In this embodiment, the eRedCap terminal may use a first capability reporting field already existing in capability signaling to report the quantity of unicast PDSCHs to the network device; correspondingly, the network device receives the first capability reporting field using capability signaling. The eRedCap terminal may also define a new second capability reporting field and report the quantity of unicast PDSCHs to the network device through the second capability reporting field; correspondingly, the network device receives the second capability reporting field through capability signaling. The value set of the second capability reporting field may be the same as or different from the value set of the first capability reporting field.

Step 1802: Schedule unicast PDSCH resources for the eRedCap terminal based on the quantity of parallel unicast PDSCHs supported by the eRedCap terminal.

In practical applications, the eRedCap terminal may not report the quantity of parallel unicast PDSCHs supported by the eRedCap terminal.

Based on this, referring to Figure 19, an embodiment of the present disclosure further provides a resource scheduling method, applied to a network device. As shown in Figure 19, the method may include:
Step 1901: In response to an eRedCap terminal not having a first capability, schedule unicast PDSCH resources for the eRedCap terminal based on a processing capability of the eRedCap terminal for a single unicast PDSCH.

It should be noted that the eRedCap terminal not having the first capability may mean that all eRedCap terminals do not have the first capability, i.e., eRedCap terminals do not support parallel unicast PDSCHs.

In summary, the resource scheduling method provided in the embodiments of the present disclosure enables the base station to learn the processing capability of the eRedCap terminal for parallel unicast PDSCHs, thereby enabling the base station to reasonably schedule unicast PDSCHs for the eRedCap terminal, avoiding the eRedCap terminal needing to process the received data in multiple times and introducing additional processing delay, which may cause the eRedCap terminal to fail to perform HARQ-ACK feedback in time when HARQ resources arrive, or only feedback NACK, resulting in waste of resources and increased energy consumption of the terminal.

Referring to Figure 20, an embodiment of the present disclosure further provides a resource scheduling method, applied to a network device. The method may include:
Step 2001: Receive a quantity of first parallel unicast PDSCHs supported by the eRedCap terminal, where a quantity of RBs occupied by the first parallel unicast PDSCHs supported by the eRedCap terminal is less than or equal to a first threshold.
Step 2002: Schedule unicast PDSCH resources for the eRedCap terminal based on the quantity of first parallel unicast PDSCHs.

As a possible implementation of this embodiment, the receiving the quantity of first parallel unicast PDSCHs supported by the eRedCap terminal may include:
receiving a first capability reporting field in a capability signaling; where the first capability reporting field is a predefined capability reporting field in the capability signaling, and the first capability reporting field includes the quantity of first parallel unicast PDSCHs supported by the eRedCap terminal;
   or,
receiving a second capability reporting field in a capability signaling; where the second capability reporting field includes the quantity of first parallel unicast PDSCHs supported by the eRedCap terminal, and the second capability reporting field is a new capability reporting field defined by the eRedCap terminal;
where a value set of the first capability reporting field is the same as or different from a value set of the second capability reporting field.

As a possible implementation of this embodiment, the quantity of first parallel unicast PDSCHs is reported by the eRedCap terminal in response to a processing delay of parallel unicast PDSCHs of the eRedCap terminal being less than or equal to a preset first delay threshold.

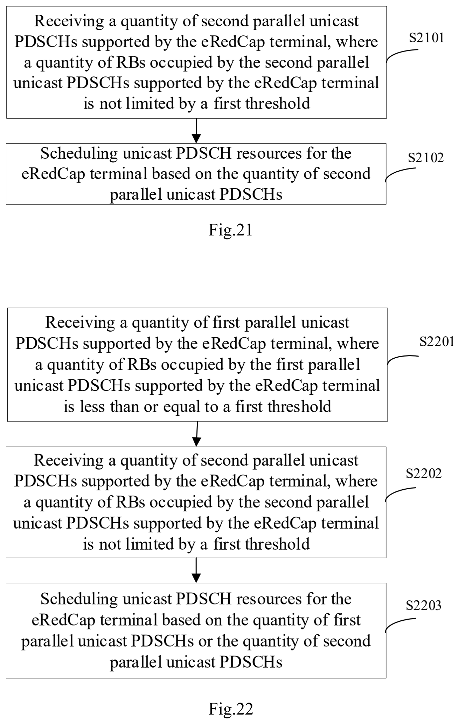

Referring to Figure 21, an embodiment of the present disclosure further provides a resource scheduling method, applied to a network device. The method may include:
Step 2101: Receive a quantity of second parallel unicast PDSCHs supported by the eRedCap terminal, where a quantity of RBs occupied by the second parallel unicast PDSCHs supported by the eRedCap terminal is not limited by a first threshold;
Step 2102: Schedule unicast PDSCH resources for the eRedCap terminal based on the quantity of second parallel unicast PDSCHs.

Referring to Figure 22, an embodiment of the present disclosure further provides a resource scheduling method, applied to a network device. The method may include:
Step 2201: Receive a quantity of first parallel unicast PDSCHs supported by the eRedCap terminal, where a quantity of RBs occupied by the first parallel unicast PDSCHs supported by the eRedCap terminal is less than or equal to a first threshold;
Step 2202: Receive a quantity of second parallel unicast PDSCHs supported by the eRedCap terminal, where a quantity of RBs occupied by the second parallel unicast PDSCHs supported by the eRedCap terminal is not limited by a first threshold;
Step 2203: Schedule unicast PDSCH resources for the eRedCap terminal based on the quantity of first parallel unicast PDSCHs or the quantity of second parallel unicast PDSCHs.

In some embodiments, the eRedCap terminal may support two types of parallel unicast PDSCH processing capabilities. The first parallel unicast PDSCH processing capability is not limited by the number of RBs. The second parallel unicast PDSCH processing capability is limited by the number of RBs. The eRedCap terminal, based on its own implementation, may selectively report these two capabilities. Specifically, if both capabilities can be achieved, i.e., the eRedCap terminal supports both capabilities, both capabilities are reported; correspondingly, the network device receives both capabilities, i.e., both Step 2201 and Step 2202 are performed. Or, if the eRedCap terminal supports only one capability, only the supported capability is reported; correspondingly, the network device receives only one capability, i.e., either Step 2201 or Step 2202 is performed. Or, if the eRedCap terminal supports neither capability, neither is reported; correspondingly, the network device receives neither capability.

In some embodiments, the first parallel unicast PDSCH processing capability supports processing X parallel unicast PDSCHs within a certain delay range. The second parallel unicast PDSCH processing capability supports processing Y parallel unicast PDSCHs within a certain delay range. The value set of X may be denoted as set#1, and the value set of Y may be denoted as set#2. set#1 and set#2 may be the same or different.

As a possible implementation of this embodiment, the receiving the quantity of second parallel unicast PDSCHs supported by the eRedCap terminal may include:
receiving a first capability reporting field in a capability signaling; where the first capability reporting field is a predefined capability reporting field in the capability signaling, and the first capability reporting field includes the quantity of second parallel unicast PDSCHs supported by the eRedCap terminal;
   or,
receiving a second capability reporting field in a capability signaling; where the second capability reporting field includes the quantity of second parallel unicast PDSCHs supported by the eRedCap terminal, and the second capability reporting field is a new capability reporting field defined by the eRedCap terminal.

As a possible implementation of this embodiment, the quantity of second parallel unicast PDSCHs is reported by the eRedCap terminal in response to a processing delay of parallel unicast PDSCHs of the eRedCap terminal being less than or equal to a preset first delay threshold.

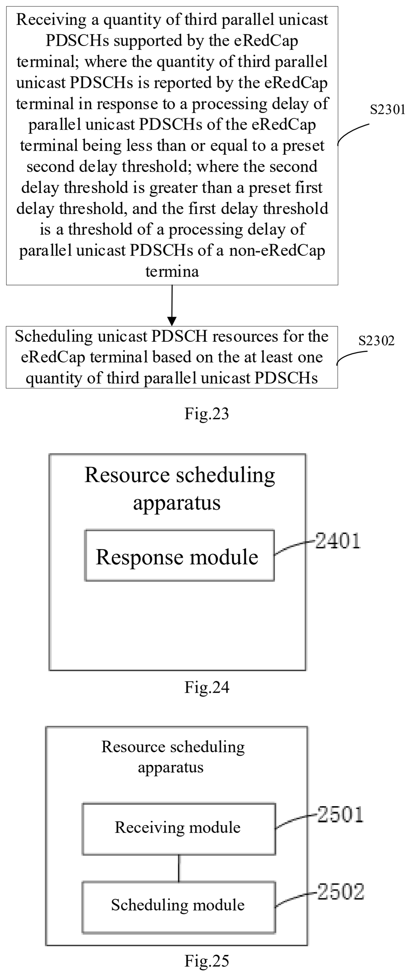

Referring to Figure 23, an embodiment of the present disclosure further provides a resource scheduling method, applied to a network device. The method may include:
Step 2301: Receive a quantity of third parallel unicast PDSCHs supported by the eRedCap terminal; where the quantity of third parallel unicast PDSCHs is reported by the eRedCap terminal in response to a processing delay of parallel unicast PDSCHs of the eRedCap terminal being less than or equal to a preset second delay threshold; where the second delay threshold is greater than a preset first delay threshold, and the first delay threshold is a threshold of a processing delay of parallel unicast PDSCHs of a non-eRedCap terminal;
Step 2302: Schedule unicast PDSCH resources for the eRedCap terminal based on the at least one quantity of third parallel unicast PDSCHs.

As a possible implementation of this embodiment, the receiving the quantity of third parallel unicast PDSCHs supported by the eRedCap terminal includes:
receiving target quantities from the eRedCap terminal, where the target quantities are all of the multiple quantities of the third parallel unicast PDSCHs supported by the eRedCap terminal;
   or,
receiving a target quantity from the eRedCap terminal, where the target quantity is a maximum value of the multiple quantities of the third parallel unicast PDSCHs supported by the eRedCap terminal;
where the multiple quantities of the third parallel unicast PDSCHs correspond to different second delay thresholds.

As a possible implementation of this embodiment, the receiving the quantity of third parallel unicast PDSCHs supported by the eRedCap terminal includes:
receiving a first capability reporting field in a capability signaling; where the first capability reporting field is a predefined capability reporting field in the capability signaling, and the first capability reporting field includes the quantity of third parallel unicast PDSCHs supported by the eRedCap terminal;
   or,
receiving a second capability reporting field in a capability signaling; where the second capability reporting field includes the quantity of third parallel unicast PDSCHs supported by the eRedCap terminal, and the second capability reporting field is a new capability reporting field defined by the eRedCap terminal;
where a value set of the first capability reporting field is the same as or different from a value set of the second capability reporting field.

Corresponding to the resource scheduling methods provided in the embodiments of Figures 3 to 17, the present disclosure further provides a resource scheduling apparatus. Since the resource scheduling apparatus provided in the embodiments of the present disclosure corresponds to the resource scheduling methods provided in the embodiments of Figures 3 to 17, the implementations of the resource scheduling methods are also applicable to the resource scheduling apparatus provided in the embodiments of the present disclosure, and will not be described in detail herein.

Figure 24 is a schematic structural diagram of a resource scheduling apparatus provided by an embodiment of the present disclosure, where the apparatus is disposed in an eRedCap terminal. As shown in Figure 24, the apparatus includes:
a response module 2401, configured to, in response to the eRedCap terminal having a first capability, report, to a network device, a quantity of parallel unicast PDSCHs supported by the eRedCap terminal;
   or,
a response module 2401, configured to, in response to the eRedCap terminal not having a first capability, not report, to a network device, a quantity of parallel unicast PDSCHs supported by the eRedCap terminal;
where the first capability includes a processing capability of the eRedCap terminal for parallel unicast PDSCHs.

As a possible implementation of this embodiment, the response module 2401 is specifically configured to:
report, to the network device, a quantity of parallel unicast PDSCHs supported by the eRedCap terminal, where a quantity of resource blocks (RBs) occupied by the first parallel unicast PDSCHs is less than or equal to a first threshold.

As a possible implementation of this embodiment, the response module 2401 is specifically configured to:
send a first capability reporting field in a capability signaling to the network device; where the first capability reporting field is a predefined capability reporting field in the capability signaling, and the first capability reporting field includes the quantity of first parallel unicast PDSCHs supported by the eRedCap terminal;
   or,
define a new capability reporting field to obtain a second capability reporting field; where the second capability reporting field includes the quantity of first parallel unicast PDSCHs supported by the eRedCap terminal; and send the second capability reporting field in the capability signaling to the network device;
where a value set of the first capability reporting field is the same as or different from a value set of the second capability reporting field.

As a possible implementation of this embodiment, the response module 2401 is specifically configured to:
in response to a processing delay of parallel unicast PDSCHs of the eRedCap terminal being less than or equal to a preset first delay threshold, report the quantity of first parallel unicast PDSCHs supported by the eRedCap terminal to the network device.

As a possible implementation of this embodiment, the response module 2401 is specifically configured to:
report, to the network device, a quantity of second parallel unicast PDSCHs supported by the eRedCap terminal, where a quantity of RBs occupied by the second parallel unicast PDSCHs supported by the eRedCap terminal is not limited by a first threshold.

As a possible implementation of this embodiment, the response module 2401 is specifically configured to:
send a first capability reporting field in a capability signaling to the network device; where the first capability reporting field is a predefined capability reporting field in the capability signaling, and the first capability reporting field includes the quantity of second parallel unicast PDSCHs supported by the eRedCap terminal;
   or,
define a new capability reporting field to obtain a second capability reporting field; where the second capability reporting field includes the quantity of second parallel unicast PDSCHs supported by the eRedCap terminal; and send the second capability reporting field in the capability signaling to the network device;
where a value set of the first capability reporting field is the same as or different from a value set of the second capability reporting field.

As a possible implementation of this embodiment, the response module 2401 is specifically configured to:
in response to a processing delay of parallel unicast PDSCHs of the eRedCap terminal being less than or equal to a preset first delay threshold, report the quantity of second parallel unicast PDSCHs supported by the eRedCap terminal to the network device.

As a possible implementation of this embodiment, the response module 2401 is specifically configured to:
in response to a processing delay of parallel unicast PDSCHs of the eRedCap terminal being less than or equal to a preset second delay threshold, report a quantity of third parallel unicast PDSCHs supported by the eRedCap terminal to the network device; where the second delay threshold is greater than a preset first delay threshold, and the first delay threshold is a threshold of a processing delay of parallel unicast PDSCHs of a non-eRedCap terminal.

As a possible implementation of this embodiment, the eRedCap terminal supports multiple quantities of the third parallel unicast PDSCHs, and the response module 2401 is specifically configured to:
report, to the network device, target quantities being all of the multiple quantities of the third parallel unicast PDSCHs supported by the eRedCap terminal;
   or,
report, to the network device, a target quantity being a maximum value of the multiple quantities of the third parallel unicast PDSCHs supported by the eRedCap terminal;
where the multiple quantities of the third parallel unicast PDSCHs correspond to different second delay thresholds.

As a possible implementation of this embodiment, the response module 2401 is specifically configured to:
send a first capability reporting field in a capability signaling to the network device; where the first capability reporting field is a predefined capability reporting field in the capability signaling, and the first capability reporting field includes the quantity of third parallel unicast PDSCHs supported by the eRedCap terminal;
   or,
define a new capability reporting field to obtain a second capability reporting field; where the second capability reporting field includes the quantity of third parallel unicast PDSCHs supported by the eRedCap terminal; and send the second capability reporting field in a capability signaling to the network device;
where a value set of the first capability reporting field is the same as or different from a value set of the second capability reporting field.

Figure 25 is a schematic structural diagram of a resource scheduling apparatus provided by an embodiment of the present disclosure, where the apparatus is disposed in a network device. As shown in Figure 25, the apparatus includes:
a receiving module 2501, configured to receive a quantity of parallel unicast PDSCHs supported by an eRedCap terminal reported by the eRedCap terminal in response to the eRedCap terminal having a first capability; and a scheduling module 2502 configured to schedule unicast PDSCH resources for the eRedCap terminal based on the quantity of the parallel unicast PDSCHs supported by the eRedCap terminal;
   or,
a scheduling module 2502, configured to schedule unicast PDSCH resources for the eRedCap terminal based on a processing capability of the eRedCap terminal for a single unicast PDSCH;
where the first capability includes a processing capability of the eRedCap terminal for parallel unicast PDSCHs.

As a possible implementation of this embodiment, the receiving module 2501 is specifically configured to:
receive a quantity of first parallel unicast PDSCHs supported by the eRedCap terminal, where a quantity of RBs occupied by the first parallel unicast PDSCHs supported by the eRedCap terminal is less than or equal to a first threshold.

As a possible implementation of this embodiment, the receiving module 2501 is specifically configured to:
receive a first capability reporting field in a capability signaling; where the first capability reporting field is a predefined capability reporting field in the capability signaling, and the first capability reporting field includes the quantity of first parallel unicast PDSCHs supported by the eRedCap terminal;
   or,
receive a second capability reporting field in a capability signaling; where the second capability reporting field includes the quantity of first parallel unicast PDSCHs supported by the eRedCap terminal, and the second capability reporting field is a new capability reporting field defined by the eRedCap terminal;
where a value set of the first capability reporting field is the same as or different from a value set of the second capability reporting field.

As a possible implementation of this embodiment, the quantity of first parallel unicast PDSCHs is reported by the eRedCap terminal in response to a processing delay of parallel unicast PDSCHs of the eRedCap terminal being less than or equal to a preset first delay threshold.

As a possible implementation of this embodiment, the receiving module 2501 is specifically configured to:
receive a quantity of second parallel unicast PDSCHs supported by the eRedCap terminal, where a quantity of RBs occupied by the second parallel unicast PDSCHs supported by the eRedCap terminal is not limited by a first threshold.

As a possible implementation of this embodiment, the receiving module 2501 is specifically configured to:
receive a first capability reporting field in a capability signaling; where the first capability reporting field is a predefined capability reporting field in the capability signaling, and the first capability reporting field includes the quantity of second parallel unicast PDSCHs supported by the eRedCap terminal;
   or,
receive a second capability reporting field in a capability signaling; where the second capability reporting field includes the quantity of second parallel unicast PDSCHs supported by the eRedCap terminal, and the second capability reporting field is a new capability reporting field defined by the eRedCap terminal.

As a possible implementation of this embodiment, the quantity of second parallel unicast PDSCHs is reported by the eRedCap terminal in response to a processing delay of parallel unicast PDSCHs of the eRedCap terminal being less than or equal to a preset first delay threshold.

As a possible implementation of this embodiment, the receiving module 2501 is specifically configured to:
receive a quantity of third parallel unicast PDSCHs supported by the eRedCap terminal; where the quantity of third parallel unicast PDSCHs is reported by the eRedCap terminal in response to a processing delay of parallel unicast PDSCHs of the eRedCap terminal being less than or equal to a preset second delay threshold; where the second delay threshold is greater than a preset first delay threshold, and the first delay threshold is a threshold of a processing delay of parallel unicast PDSCHs of a non-eRedCap terminal.

As a possible implementation of this embodiment, the receiving module 2501 is specifically configured to:
receive target quantities from the eRedCap terminal, where the target quantities are all of the multiple quantities of the third parallel unicast PDSCHs supported by the eRedCap terminal;
   or,
receive a target quantity from the eRedCap terminal, where the target quantity is a maximum value of the multiple quantities of the third parallel unicast PDSCHs supported by the eRedCap terminal;
where the multiple quantities of the third parallel unicast PDSCHs correspond to different second delay thresholds.

As a possible implementation of this embodiment, the receiving module 2501 is specifically configured to:
receive a first capability reporting field in a capability signaling; where the first capability reporting field is a predefined capability reporting field in the capability signaling, and the first capability reporting field includes the quantity of third parallel unicast PDSCHs supported by the eRedCap terminal;
   or,
receive a second capability reporting field in a capability signaling; where the second capability reporting field includes the quantity of third parallel unicast PDSCHs supported by the eRedCap terminal, and the second capability reporting field is a new capability reporting field defined by the eRedCap terminal;
where a value set of the first capability reporting field is the same as or different from a value set of the second capability reporting field.

To achieve the above embodiments, the present disclosure further provides a resource scheduling apparatus, where the apparatus includes a processor and a memory, where the memory stores a computer program, and the processor executes the computer program stored in the memory to cause the apparatus to perform the method as described in any one of Figures 2 to 23.

To achieve the above embodiments, the present disclosure further provides another resource scheduling apparatus, including: a processor and an interface circuit;
where the interface circuit is configured to receive code instructions and transmit the code instructions to the processor, and
the processor is configured to run the code instructions to perform the method as described in any one of Figures 2 to 23.

To achieve the above embodiments, the present disclosure provides a computer-readable storage medium, having stored therein instructions that, when executed, cause the method as described in any one of Figures 2 to 23 to be implemented.

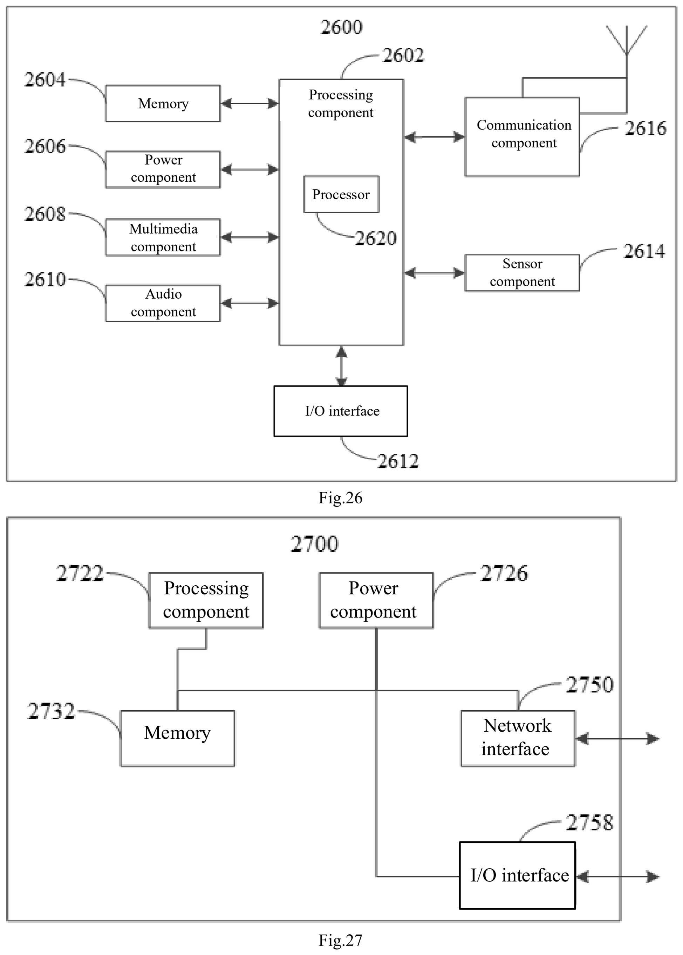

Figure 26 is a block diagram of a terminal device provided by an embodiment of the present disclosure. For example, terminal device 2600 may be a mobile phone, computer, digital broadcast terminal, messaging device, gaming console, tablet device, medical device, fitness equipment, personal digital assistant, etc.

Referring to Figure 26, terminal device 2600 may include at least one of the following components: a processing component 2602, a memory 2604, a power component 2606, a multimedia component 2608, an audio component 2610, an input/output (I/O) interface 2612, a sensor component 2614, and a communication component 2616.

The processing component 2602 typically controls overall operations of the terminal device 2600, such as the operations associated with display, telephone calls, data communications, camera operations, and recording operations. The processing component 2602 may include at least one processor 2620 to execute instructions to perform all or part of the steps in the above described methods. Moreover, the processing component 2602 may include at least one module which facilitates the interaction between the processing component 2602 and other components. For instance, the processing component 2602 may include a multimedia module to facilitate the interaction between the multimedia component 2608 and the processing component 2602.

The memory 2604 is configured to store various types of data to support the operation of the terminal device 2600. Examples of such data include instructions for any application or method operated on the terminal device 2600, contact data, phonebook data, messages, pictures, video, etc. The memory 2604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2606 provides power to various components of the terminal device 2600. The power component 2606 may include a power management system, at least one power source, and any other components associated with the generation, management, and distribution of power in the terminal device 2600.

The multimedia component 2608 includes a screen providing an output interface between the terminal device 2600 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe operation. In some embodiments, the multimedia component 2608 includes a front camera and/or a rear camera. The front camera and the rear camera may receive an external multimedia datum while the terminal device 2600 is in an operation mode, such as a photographing mode or a video mode. Each of the front camera and the rear camera may be a fixed optical lens system or have focus and optical zoom capability.

The audio component 2610 is configured to output and/or input audio signals. For example, the audio component 2610 includes a microphone (MIC) configured to receive an external audio signal when the terminal device 2600 is in an operation mode, such as a call mode, a recording mode, and a voice recognition mode. The received audio signal may be further stored in the memory 2604 or transmitted via the communication component 2616. In some embodiments, the audio component 2610 further includes a speaker to output audio signals.

The I/O interface 2612 provides an interface between the processing component 2602 and peripheral interface modules, such as a keyboard, a click wheel, buttons, and the like. The buttons may include, but are not limited to, a home button, a volume button, a starting button, and a locking button.

The sensor component 2614 includes one or more sensors to provide status assessments of various aspects of the terminal device 2600. For instance, the sensor component 2614 may detect an open/closed status of the terminal device 2600, relative positioning of components (e.g., the display and the keypad of the terminal device 2600), a change in position of the terminal device 2600 or a component of the terminal device 2600, a presence or absence of user contact with the terminal device 2600, an orientation or an acceleration/deceleration of the terminal device 2600, and a change in temperature of the terminal device 2600. The sensor component 2614 may include a proximity sensor configured to detect the presence of nearby objects without any physical contact. The sensor component 2614 may also include a light sensor, such as a CMOS or CCD image sensor, for use in imaging applications. In some embodiments, the sensor component 2614 may also include an accelerometer sensor, a gyroscope sensor, a magnetic sensor, a pressure sensor, or a temperature sensor.

The communication component 2616 is configured to facilitate communication, wired or wirelessly, between the terminal device 2600 and other devices. The terminal device 2600 can access a wireless network based on a communication standard, such as WiFi, 2G, or 3G, or a combination thereof. In an exemplary embodiment, the communication component 2616 receives a broadcast signal or broadcast associated information from an external broadcast management system via a broadcast channel. In an exemplary embodiment, the communication component 2616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal device 2600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the method shown in Figures 2 to 23.

Figure 27 is a block diagram of a network device provided by an embodiment of the present disclosure. As shown in Figure 27, network device 2700 includes a processing component 2722, which further includes at least one processor, and a memory resource represented by a memory 2732, for storing instructions executable by the processing component 2722, such as application programs. The application programs stored in the memory 2732 may include one or more modules, each corresponding to a set of instructions. Moreover, the processing component 2722 is configured to execute the instructions to perform any method applied to the network device as described above, for example, the method described in the embodiments of Figures 3 to 17.

The network device 2700 may also include a power component 2726 configured to perform power management of the network device 2700, a wired or wireless network interface 2750 configured to connect the network device 2700 to a network, and an input/output (I/O) interface 2758. The network device 2700 may operate an operating system stored in the memory 2732, such as Windows Server^{™}, Mac OS X^{™} Unix^{™}, Linux^{™}, FreeBSD^{™}, or the like.

In exemplary embodiments, there is also provided a non-transitory computer-readable storage medium comprising instructions, such as included in the memory 2604, which may be executed by the processor 2620 of the terminal device 2600 to complete the method shown in Figures 2 to 23. For example, the non-transitory computer-readable storage medium may be a ROM, a random access memory (RAM), a CD-ROM, a magnetic tape, a floppy disc, an optical data storage device, and the like.

Those skilled in the art will appreciate that the various illustrative logical blocks and steps listed in the embodiments of the present disclosure may be implemented in electronic hardware, computer software, or a combination of both. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In the above embodiments, it may be implemented in whole or in part by software, hardware, firmware, or any combination thereof. When implemented using software, it may be implemented in whole or in part in the form of a computer program product. The computer program product includes one or more computer programs. When the computer programs are loaded and executed on a computer, the processes or functions according to the embodiments of the present disclosure are generated in whole or in part. The computer may be a general-purpose computer, a special-purpose computer, a computer network, or other programmable apparatus. The computer programs may be stored in a computer-readable storage medium or transmitted from one computer-readable storage medium to another computer-readable storage medium. For example, the computer programs may be transmitted from a website, computer, server, or data center to another website, computer, server, or data center via wired (e.g., coaxial cable, fiber optic, digital subscriber line (DSL)) or wireless (e.g., infrared, wireless, microwave) means. The computer-readable storage medium may be any available medium that can be accessed by a computer or a data storage device, such as a server, data center, etc., that integrates one or more available media. The available medium may be a magnetic medium (e.g., floppy disk, hard disk, magnetic tape), an optical medium (e.g., DVD), or a semiconductor medium (e.g., solid state disk (SSD)), etc.

Those of ordinary skill in the art will understand that the first, second, etc. ordinal numbers used in this application are only for convenience of description and are not used to limit the scope of the embodiments of the present disclosure, nor do they indicate order.

The term "at least one" in this application may also be described as "one or more", and "multiple" may be two, three, four, or more, which is not limited in this application. In the embodiments of the present disclosure, for a technical feature, the terms "first", "second", "third", "A", "B", "C", "D", etc. are used to distinguish the technical features within that technical feature. The technical features described by "first", "second", "third", "A", "B", "C", "D" have no sequential or size order.

The correspondence shown in the tables in this application may be configured or predefined. The values of the information in each table are only examples and may be configured to other values, which are not limited in this application. When configuring the correspondence between configuration information and parameters, it is not necessary to configure all the correspondences shown in the tables. For example, in the tables in this application, the correspondences shown in some rows may not be configured. Also, appropriate adjustments may be made based on the above tables, such as splitting, merging, etc. The parameter names shown in the titles of the above tables may also be other names understandable by the resource scheduling apparatus, and the values or representations of the parameters may also be other values or representations understandable by the resource scheduling apparatus. When implementing the above tables, other data structures may also be used, such as arrays, queues, containers, stacks, linear lists, pointers, linked lists, trees, graphs, structures, classes, heaps, hash tables, or hash maps.

The term "predefined" in this application may be understood as defined, predefined, stored, pre-stored, pre-negotiated, pre-configured, solidified, or pre-burned.

Those of ordinary skill in the art will recognize that the units and algorithm steps of the examples described in combination with the embodiments disclosed herein can be implemented in electronic hardware, or a combination of computer software and electronic hardware. Whether these functions are performed in hardware or software depends on the specific application and design constraints of the technical solution. Professionals may use different methods for each specific application to implement the described functions, but such implementation should not be considered beyond the scope of this application.

For the convenience and brevity of description, the specific working processes of the above-described systems, apparatuses, and units may be referred to the corresponding processes in the foregoing method embodiments, and are not repeated here.

The above are only specific implementations of this application, but the scope of protection of this application is not limited thereto. Any person skilled in the art can easily think of changes or substitutions within the technical scope disclosed in this application, which should be covered by the scope of protection of this application. Therefore, the scope of protection of this application shall be subject to the scope of protection of the claims.

## Claims

1. A method for scheduling resource, performed by an enhanced reduced capability (eRedCap) terminal, comprising:
in response to the eRedCap terminal having a first capability, reporting, to a network device, a quantity of parallel unicast physical downlink shared channels (PDSCHs) supported by the eRedCap terminal;
or
in response to the eRedCap terminal not having a first capability, not reporting, to a network device, a quantity of parallel unicast PDSCHs supported by the eRedCap terminal;
wherein the first capability comprises a processing capability of the eRedCap terminal for parallel unicast PDSCHs.

2. The method according to claim 1, wherein reporting, to the network device, the quantity of parallel unicast PDSCHs supported by the eRedCap terminal comprises:
reporting, to the network device, a quantity of first parallel unicast PDSCHs supported by the eRedCap terminal, wherein a quantity of resource blocks (RBs) occupied by the first parallel unicast PDSCHs is less than or equal to a first threshold.

3. The method according to claim 2, wherein reporting, to the network device, the quantity of the first parallel unicast PDSCHs supported by the eRedCap terminal comprises:
sending a first capability reporting field in a capability signaling to the network device, wherein the first capability reporting field is a predefined capability reporting field in the capability signaling, and the first capability reporting field comprises the quantity of the first parallel unicast PDSCHs supported by the eRedCap terminal;
or
defining a new capability reporting field to obtain a second capability reporting field, wherein the second capability reporting field comprises the quantity of the first parallel unicast PDSCHs supported by the eRedCap terminal; and sending the second capability reporting field in the capability signaling to the network device;
wherein a value set of the first capability reporting field is the same as or different from a value set of the second capability reporting field.

4. The method according to claim 2 or 3, wherein reporting, to the network device, the quantity of the first parallel unicast PDSCHs supported by the eRedCap terminal comprises:
in response to a processing delay of parallel unicast PDSCHs of the eRedCap terminal being less than or equal to a preset first delay threshold, reporting the quantity of the first parallel unicast PDSCHs supported by the eRedCap terminal to the network device.

5. The method according to any one of claims 1 to 3, wherein reporting, to the network device, the quantity of the parallel unicast PDSCHs supported by the eRedCap terminal comprises:
reporting, to the network device, a quantity of second parallel unicast PDSCHs supported by the eRedCap terminal, wherein a quantity of RBs occupied by the second parallel unicast PDSCHs supported by the eRedCap terminal is not limited by a first threshold.

6. The method according to claim 5, wherein reporting, to the network device, the quantity of the second parallel unicast PDSCHs supported by the eRedCap terminal comprises:
sending a first capability reporting field in a capability signaling to the network device, wherein the first capability reporting field is a predefined capability reporting field in the capability signaling, and the first capability reporting field comprises the quantity of the second parallel unicast PDSCHs supported by the eRedCap terminal;
or
defining a new capability reporting field to obtain a second capability reporting field, wherein the second capability reporting field comprises the quantity of the second parallel unicast PDSCHs supported by the eRedCap terminal; and sending the second capability reporting field in the capability signaling to the network device;
wherein a value set of the first capability reporting field is the same as or different from a value set of the second capability reporting field.

7. The method according to claim 5, wherein reporting, to the network device, the quantity of the second parallel unicast PDSCHs supported by the eRedCap terminal comprises:
in response to a processing delay of parallel unicast PDSCHs of the eRedCap terminal being less than or equal to a preset first delay threshold, reporting the quantity of the second parallel unicast PDSCHs supported by the eRedCap terminal to the network device.

8. The method according to claim 1, wherein reporting, to the network device, the quantity of parallel unicast PDSCHs supported by the eRedCap terminal comprises:
in response to a processing delay of parallel unicast PDSCHs of the eRedCap terminal being less than or equal to a preset second delay threshold, reporting a quantity of third parallel unicast PDSCHs supported by the eRedCap terminal to the network device, wherein the second delay threshold is greater than a preset first delay threshold, and the first delay threshold is a threshold of a processing delay of parallel unicast PDSCHs of a non-eRedCap terminal.

9. The method according to claim 8, wherein the eRedCap terminal supports multiple quantities of the third parallel unicast PDSCHs, and the reporting the quantity of the third parallel unicast PDSCHs supported by the eRedCap terminal to the network device comprises:
reporting, to the network device, target quantities being all of the multiple quantities of the third parallel unicast PDSCHs supported by the eRedCap terminal;
or
reporting, to the network device, a target quantity being a maximum value of the multiple quantities of the third parallel unicast PDSCHs supported by the eRedCap terminal;
wherein the multiple quantities of the third parallel unicast PDSCHs correspond to different second delay thresholds.

10. The method according to claim 8 or 9, wherein reporting the quantity of the third parallel unicast PDSCHs supported by the eRedCap terminal to the network device comprises:
sending a first capability reporting field in a capability signaling to the network device, wherein the first capability reporting field is a predefined capability reporting field in the capability signaling, and the first capability reporting field comprises the quantity of the third parallel unicast PDSCHs supported by the eRedCap terminal;
or
defining a new capability reporting field to obtain a second capability reporting field, wherein the second capability reporting field comprises the quantity of the third parallel unicast PDSCHs supported by the eRedCap terminal; and sending the second capability reporting field in a capability signaling to the network device;
wherein a value set of the first capability reporting field is the same as or different from a value set of the second capability reporting field.

11. A method for scheduling resource, performed by a network device, comprising:
receiving a quantity of parallel unicast physical downlink shared channels (PDSCHs) supported by an enhanced reduced capability (eRedCap) terminal reported by the eRedCap terminal in response to the eRedCap terminal having a first capability; and scheduling unicast PDSCH resources for the eRedCap terminal based on the quantity of the parallel unicast PDSCHs supported by the eRedCap terminal;
or
scheduling unicast PDSCH resources for the eRedCap terminal based on a processing capability of the eRedCap terminal for a single unicast PDSCH;
wherein the first capability comprises a processing capability of the eRedCap terminal for parallel unicast PDSCHs.

12. The method according to claim 11, wherein receiving the quantity of the parallel unicast PDSCHs supported by the eRedCap terminal reported by the eRedCap terminal in response to the eRedCap terminal having the first capability comprises:
receiving a quantity of first parallel unicast PDSCHs supported by the eRedCap terminal, wherein a quantity of resource blocks (RBs) occupied by the first parallel unicast PDSCHs supported by the eRedCap terminal is less than or equal to a first threshold.

13. The method according to claim 12, wherein receiving the quantity of the first parallel unicast PDSCHs supported by the eRedCap terminal comprises:
receiving a first capability reporting field in a capability signaling, wherein the first capability reporting field is a predefined capability reporting field in the capability signaling, and the first capability reporting field comprises the quantity of the first parallel unicast PDSCHs supported by the eRedCap terminal;
or
receiving a second capability reporting field in a capability signaling, wherein the second capability reporting field comprises the quantity of the first parallel unicast PDSCHs supported by the eRedCap terminal, and the second capability reporting field is a new capability reporting field defined by the eRedCap terminal;
wherein a value set of the first capability reporting field is the same as or different from a value set of the second capability reporting field.

14. The method according to claim 12 or 13, wherein quantity of the first parallel unicast PDSCHs is reported by the eRedCap terminal in response to a processing delay of parallel unicast PDSCHs of the eRedCap terminal being less than or equal to a preset first delay threshold.

15. The method according to any one of claims 11 to 13, wherein receiving the quantity of the parallel unicast PDSCHs supported by the eRedCap terminal reported by the eRedCap terminal in response to the eRedCap terminal having the first capability comprises:
receiving a quantity of second parallel unicast PDSCHs supported by the eRedCap terminal, wherein a quantity of RBs occupied by the second parallel unicast PDSCHs supported by the eRedCap terminal is not limited by a first threshold.

16. The method according to claim 15, wherein receiving the quantity of the second parallel unicast PDSCHs supported by the eRedCap terminal comprises:
receiving a first capability reporting field in a capability signaling, wherein the first capability reporting field is a predefined capability reporting field in the capability signaling, and the first capability reporting field comprises the quantity of the second parallel unicast PDSCHs supported by the eRedCap terminal;
or
receiving a second capability reporting field in a capability signaling, wherein the second capability reporting field comprises the quantity of second parallel unicast PDSCHs supported by the eRedCap terminal, and the second capability reporting field is a new capability reporting field defined by the eRedCap terminal.

17. The method according to claim 15, wherein quantity of the second parallel unicast PDSCHs is reported by the eRedCap terminal in response to a processing delay of parallel unicast PDSCHs of the eRedCap terminal being less than or equal to a preset first delay threshold.

18. The method according to claim 11, wherein receiving the quantity of the parallel unicast PDSCHs supported by the eRedCap terminal reported by the eRedCap terminal in response to the eRedCap terminal having the first capability comprises:
receiving a quantity of third parallel unicast PDSCHs supported by the eRedCap terminal, wherein the quantity of the third parallel unicast PDSCHs is reported by the eRedCap terminal in response to a processing delay of parallel unicast PDSCHs of the eRedCap terminal being less than or equal to a preset second delay threshold, wherein the preset second delay threshold is greater than a preset first delay threshold, and the first delay threshold is a threshold of a processing delay of parallel unicast PDSCHs of a non-eRedCap terminal.

19. The method according to claim 18, wherein the eRedCap terminal supports multiple quantities of the third parallel unicast PDSCHs, and the receiving the quantity of the third parallel unicast PDSCHs supported by the eRedCap terminal comprises:
receiving target quantities from the eRedCap terminal, wherein the target quantities are all of the multiple quantities of the third parallel unicast PDSCHs supported by the eRedCap terminal;
or
receiving a target quantity from the eRedCap terminal, wherein the target quantity is a maximum value of the multiple quantities of the third parallel unicast PDSCHs supported by the eRedCap terminal;
wherein the multiple quantities of the third parallel unicast PDSCHs correspond to different second delay thresholds.

20. The method according to claim 18 or 19, wherein receiving the quantity of the third parallel unicast PDSCHs supported by the eRedCap terminal comprises:
receiving a first capability reporting field in a capability signaling, wherein the first capability reporting field is a predefined capability reporting field in the capability signaling, and the first capability reporting field comprises the quantity of the third parallel unicast PDSCHs supported by the eRedCap terminal;
or
receiving a second capability reporting field in a capability signaling, wherein the second capability reporting field comprises the quantity of the third parallel unicast PDSCHs supported by the eRedCap terminal, and the second capability reporting field is a new capability reporting field defined by the eRedCap terminal;
wherein a value set of the first capability reporting field is the same as or different from a value set of the second capability reporting field.

21. An apparatus for scheduling resource, comprising:
a response module configured to, in response to the eRedCap terminal having a first capability, report, to a network device, a quantity of parallel unicast physical downlink shared channels (PDSCHs) supported by the eRedCap terminal;
or
a response module configured to, in response to the eRedCap terminal not having a first capability, not report, to a network device, a quantity of parallel unicast PDSCHs supported by the eRedCap terminal;
wherein the first capability comprises a processing capability of the eRedCap terminal for parallel unicast PDSCHs.

22. An apparatus for scheduling resource, comprising:
a receiving module, configured to receive a quantity of parallel unicast physical downlink shared channels (PDSCHs) supported by an enhanced reduced capability (eRedCap) terminal reported by the eRedCap terminal in response to the eRedCap terminal having a first capability; and a scheduling module configured to schedule unicast PDSCH resources for the eRedCap terminal based on the quantity of the parallel unicast PDSCHs supported by the eRedCap terminal;
or
a scheduling module, configured to schedule unicast PDSCH resources for the eRedCap terminal based on a processing capability of the eRedCap terminal for a single unicast PDSCH;
wherein the first capability comprises a processing capability of the eRedCap terminal for parallel unicast PDSCHs.

23. An apparatus for scheduling resource, comprising a processor and a memory, wherein the memory stores a computer program, and the processor executes the computer program stored in the memory to cause the apparatus to perform the method according to any one of claims 1 to 10, or the method according to any one of claims 11 to 20.

24. A an apparatus for scheduling resource, comprising: a processor and an interface circuit;
wherein the interface circuit is configured to receive code instructions and transmit the code instructions to the processor, and the processor is configured to run the code instructions to perform the method according to any one of claims 1 to 10, or the method according to any one of claims 11 to 20.

25. A computer-readable storage medium having stored therein instructions that, when executed, cause the method according to any one of claims 1 to 10 to be implemented, or cause the method according to any one of claims 11 to 20 to be implemented.
